# EUROPEAN PATENT APPLICATION

(11) **EP 4 513 921 A1**
(43) Date of publication of application: **26.02.2025**
(21) Application number: 23799196.3
(22) Date of filing: 24.04.2023
(51) Int. Cl.: H04W 12/02

(54) **KEY MANAGEMENT METHOD AND COMMUNICATION APPARATUS**

(30) Priority: 06.05.2022 CN 202210487154
(71) Applicant: Huawei Technologies Co., Ltd., Shenzhen, Guangdong 518129 (CN)
(72) Inventor: LEI, Ao, Shenzhen, Guangdong 518129 (CN); WU, Yizhuang, Shenzhen, Guangdong 518129 (CN); CUI, Yang, Shenzhen, Guangdong 518129 (CN); HU, Li, Shenzhen, Guangdong 518129 (CN)
(74) Representative: Körber, Martin Hans
(86) International application number: PCT/CN2023/090413
(87) International publication number: WO 2023/213209

(57) **Abstract**

This application pertains to the field of communication technologies, and provides a key management method and a communication apparatus, to perform security protection on user identity information. In the method, a terminal device obtains identification information of a first decryption network element in a local network. The terminal device obtains, based on the identification information and a mapping relationship, a first encryption key corresponding to the first decryption network element, where the mapping relationship records at least one decryption network element and an encryption key corresponding to each of the at least one decryption network element, and the at least one decryption network element includes the first decryption network element. The terminal device encrypts the user identity information by using the first encryption key, to obtain a hidden user identity. The terminal device sends a registration request to the local network through an access network device, where the registration request includes the hidden user identity.

## Description

This application claims priority to Chinese Patent Application No. 2022104871542, filed with the China National Intellectual Property Administration on May 6, 2022 and entitled "KEY MANAGEMENT METHOD AND COMMUNICATION APPARATUS", which is incorporated herein by reference in its entirety.

### TECHNICAL FIELD

This application relates to the communication field, and in particular, to a key management method and a communication apparatus.

### BACKGROUND

In an isolated E-UTRAN operation for public safety (isolated E-UTRAN operation for public safety, IOPS) scenario of a long term evolution (long term evolution, LTE) network, an access network device that has an IOPS function can access an IOPS network when a connection between the access network device and a core network element in a macro network is interrupted, and continue to provide a communication service for a terminal device.

In a 5th generation (5th generation, 5G) network, encrypted user identity information needs to be carried when a terminal device sends a registration request to a core network element in a 5G network. In other words, the terminal device encrypts user identity information by using a public key, and the core network element (for example, a unified data management (unified data management, UDM) network element) in the 5G network decrypts the encrypted user identity information by using a private key. The public key and the private key are mutually asymmetric keys. However, there is a risk of leakage of the asymmetric keys.

Therefore, in the 5G network and a subsequent evolved network, how to perform security protection on user identity information is an urgent problem to be resolved.

### SUMMARY

This application provides a key management method and a communication apparatus, to perform security protection on user identity information. To achieve the foregoing objective, this application uses the following technical solutions.

According to a first aspect, a key management method is provided. An execution body of the method may be a terminal device, or may be a chip used in a terminal device. Descriptions are provided below by using an example in which the execution body is a terminal device.

The method includes: A terminal device obtains identification information of a first decryption network element in a local network. The terminal device obtains, based on the identification information and a mapping relationship, a first encryption key corresponding to the first decryption network element. The mapping relationship records at least one decryption network element and an encryption key corresponding to each of the at least one decryption network element, and the at least one decryption network element includes the first decryption network element. The terminal device encrypts the user identity information by using the first encryption key, to obtain a hidden user identity. The terminal device sends a registration request to the local network through an access network device, where the registration request includes the hidden user identity.

In other words, the mapping relationship indicates encryption keys corresponding to different decryption network elements. When the terminal device determines a specific local network to which the terminal device is to register, the terminal device may learn of, based on the mapping relationship, an encryption key corresponding to a decryption network element in the local network, to be specific, the first encryption key, and encrypt the user identity information by using the first encryption key corresponding to the local network, to obtain the hidden user identity. In this way, decryption network elements in different local networks correspond to different encryption keys, and correspondingly, the decryption network elements in the different local networks correspond to different decryption keys. Even if a decryption network element in a specific local network is attacked, a decryption key of a decryption network element in a local network that is not attacked is not leaked. When the terminal device sends the registration request to a local network that is not attacked, the registration request carries the hidden user identity encrypted by using the first encryption key, so that the user identity information is protected.

In a possible design, that a terminal device obtains identification information of a first decryption network element in a local network includes: The terminal device receives a broadcast message, where the broadcast message includes the identification information of the first decryption network element and an identifier of the local network. In other words, for decryption network elements in different local networks, each decryption network element has one piece of identification information that is unique in an entire network.

In a possible design, that a terminal device obtains identification information of a first decryption network element in a local network includes: The terminal device receives an identifier of the local network and a first identifier from the access network device, where the first identifier identifies a decryption network element in the local network. The terminal device determines the identification information of the first decryption network element based on the identifier of the local network and the first identifier. In other words, for decryption network elements in different local networks, first identifiers of different decryption network elements may be the same. The terminal device first determines a specific network based on the identifier of the local network, and then determines, with reference to the first identifier, a specific decryption network element, in the network, that the first decryption network element is.

In a possible design, the terminal device performs the technical solutions of this application in response to the broadcast message. For example, the following operations are performed: The terminal device obtains, based on the identification information and the mapping relationship, the first encryption key corresponding to the first decryption network element; encrypts the user identity information by using the first encryption key, to obtain the hidden user identity; and sends the registration request to the local network through the access network device, and so on.

In a possible design, the identifier of the local network is a public land mobile network identifier PLMN ID used by the local network.

In a possible design, the mapping relationship is preconfigured in the terminal device.

In a possible design, the terminal device includes mobile equipment ME and a universal subscriber identity module USIM, and a mapping relationship is preconfigured in the USIM. That a terminal device obtains identification information of a first decryption network element in a local network includes: The ME obtains the identification information of the first decryption network element in the local network. That the terminal device obtains, based on the identification information and a mapping relationship, a first encryption key corresponding to the first decryption network element includes: The ME sends the identification information to the USIM. The USIM determines, based on the identification information and the mapping relationship, the first encryption key corresponding to the first decryption network element. That the terminal device encrypts the user identity information by using the first encryption key, to obtain the hidden user identity includes: The USIM encrypts the user identity information by using the first encryption key, to obtain the hidden user identity, and sends the hidden user identity to the ME. The ME receives the hidden user identity from the USIM. That the terminal device sends a registration request to the local network through an access network device includes: The ME sends the registration request to the local network through the access network device.

In other words, the USIM may generate the hidden user identity based on the first encryption key when the terminal device includes the ME and the USIM and the mapping relationship is preconfigured in the USIM.

In a possible design, the terminal device includes ME and a USIM, and a mapping relationship is preconfigured in the USIM. That a terminal device obtains identification information of a first decryption network element in a local network includes: The ME obtains the identification information of the first decryption network element in the local network. That the terminal device obtains, based on the identification information and a mapping relationship, a first encryption key corresponding to the first decryption network element includes: The ME sends a first request to the USIM. The USIM sends the mapping relationship and the user identity information to the ME in response to the first request. The ME receives the mapping relationship and user identity information from the USIM. The ME determines, based on the identification information and the mapping relationship, the first encryption key corresponding to the first decryption network element. That the terminal device encrypts the user identity information by using the first encryption key, to obtain the hidden user identity includes: The ME encrypts the user identity information by using the first encryption key, to obtain the hidden user identity. That the terminal device sends a registration request to the local network through an access network device includes: The ME sends the registration request to the local network through the access network device.

In other words, the ME may generate the hidden user identity based on the first encryption key when the terminal device includes the ME and the USIM and the mapping relationship is preconfigured in the USIM.

In a possible design, the method further includes: The terminal device receives the mapping relationship from a second decryption network element in a macro network through the access network device. In other words, before the terminal device registers to the local network, the terminal device may register to the macro network, and obtain the mapping relationship from the macro network.

In a possible design, the mapping relationship is carried in a registration accept message. In other words, the terminal device may obtain the mapping relationship in a process of registering to the macro network.

In a possible design, the mapping relationship is carried in a user equipment configuration update command message. In other words, the terminal device may obtain the mapping relationship in a user equipment configuration update process of the macro network.

In a possible design, the terminal device includes ME and a USIM. That a terminal device obtains identification information of a first decryption network element in a local network includes: The ME obtains the identification information of the first decryption network element in the local network. That the terminal device receives the mapping relationship from a second decryption network element in a macro network through the access network device includes: The ME receives the mapping relationship from the second decryption network element in the macro network through the access network device. That the terminal device obtains, based on the identification information and a mapping relationship, a first encryption key corresponding to the first decryption network element includes: The ME determines, based on the identification information and the mapping relationship, the first encryption key corresponding to the first decryption network element. That the terminal device encrypts the user identity information by using the first encryption key, to obtain a hidden user identity includes: The ME sends a second request to the USIM. The USIM sends the user identity information to the ME in response to the second request. The ME receives the user identity information from the USIM. The ME encrypts the user identity information by using the first encryption key, to obtain the hidden user identity. That the terminal device sends a registration request to the local network through an access network device includes: The ME sends the registration request to the local network through the access network device.

In other words, the ME may generate the hidden user identity based on the first encryption key when the terminal device includes the ME and the USIM and the ME receives the mapping relationship.

In a possible design, the terminal device includes ME and a USIM. That a terminal device obtains identification information of a first decryption network element in a local network includes: The ME obtains the identification information of the first decryption network element in the local network. That the terminal device receives the mapping relationship from a second decryption network element in a macro network through the access network device includes: The ME receives the mapping relationship from the second decryption network element in the macro network through the access network device. That the terminal device obtains, based on the identification information and a mapping relationship, a first encryption key corresponding to the first decryption network element includes: The ME determines, based on the identification information and the mapping relationship, the first encryption key corresponding to the first decryption network element. That the terminal device encrypts the user identity information by using the first encryption key, to obtain a hidden user identity includes: The ME sends the first encryption key to the USIM. The USIM receives the first encryption key from the ME. The USIM encrypts the user identity information by using the first encryption key, to obtain the hidden user identity, and sends the hidden user identity to the ME. The ME receives the hidden user identity from the USIM. That the terminal device sends a registration request to the local network through an access network device includes: The ME sends the registration request to the local network through the access network device.

In other words, the USIM may generate the hidden user identity based on the first encryption key when the terminal device includes the ME and the USIM and the ME receives the mapping relationship.

In a possible design, the method further includes: The terminal device sends capability information to an access and mobility management network element in the macro network, where the capability information indicates that the terminal device has a capability of accessing the local network, so that a core network element in the macro network learns of the capability of the terminal device.

According to a second aspect, a key management method is provided. An execution body of the method may be an access network device, or may be a chip used in an access network device. Descriptions are provided below by using an example in which the execution body is an access network device.

The method includes: In a process of establishing a backhaul link between an access network device and a core network element in a local network, the access network device obtains identification information of a first decryption network element in the local network. The access network device sends the identification information of the first decryption network element.

In other words, the access network device provides the terminal device with the identification information of the first decryption network element in a local network to which the access network device is attached, so that the terminal device determines the first encryption key corresponding to the first decryption network element, and encrypts the user identity information, thereby obtaining the hidden user identity. In this way, when the terminal device sends the registration request to the local network, the registration request carries the hidden user identity, to protect the user identity information.

In a possible design, that the access network device sends the identification information of the first decryption network element includes: The access network device sends a broadcast message. The broadcast message includes the identification information of the first decryption network element and an identifier of the local network.

In a possible design, that the access network device sends the identification information of the first decryption network element includes: The access network device sends an identifier of the local network and a first identifier, where the identifier of the local network and the first identifier are used to determine the identification information of the first decryption network element.

In a possible design, the identifier of the local network is a public land mobile network identifier PLMN ID used by the local network.

In a possible design, the method further includes: The access network device establishes the backhaul link to the core network element in the local network when a connection between the access network device and a core network element in a macro network is broken, to continue to provide a communication service for the terminal device by using the local network.

In a possible design, the method further includes: The access network device establishes an internet protocol security IPsec link to the core network element in the local network, where the backhaul link includes the IPsec link. That the access network device obtains identification information of a first decryption network element in the local network includes: The access network device receives the identification information of the first decryption network element from the core network element in the local network by using an internet key exchange protocol security association initial IKE_SA_INIT message or an internet key exchange protocol authentication IKE_AUTH message, so that the access network device obtains the identification information of the first decryption network element in a process of establishing the IPsec link.

In a possible design, the method further includes: The access network device establishes a datagram transport layer security DTLS link to the core network element in the local network, where the backhaul link includes the DTLS link. That the access network device obtains identification information of a first decryption network element in the local network includes: The access network device receives the identification information of the first decryption network element from the core network element in the local network by using a handshake message, so that the access network device obtains the identification information of the first decryption network element in a process of establishing the DTLS link.

According to a third aspect, a key management method is provided. An execution body of the method may be a terminal device, or may be a chip used in a terminal device. Descriptions are provided below by using an example in which the execution body is a terminal device.

The method includes: A terminal device receives a first encryption key from a second decryption network element in a macro network. There is a correspondence between the first encryption key and a first local network. When the terminal device receives an identifier of the first local network, the terminal device encrypts user identity information by using the first encryption key, to obtain a hidden user identity. The terminal device sends a registration request to the first local network, where the registration request includes the hidden user identity.

In other words, when the terminal device accesses the macro network, the terminal device can obtain the first encryption key from the macro network, and encrypt the user identity information by using the first encryption key. In this way, decryption network elements in different local networks correspond to different encryption keys, and correspondingly, the decryption network elements in the different local networks correspond to different decryption keys. Even if a decryption network element in a specific local network is attacked, a decryption key of a decryption network element in a local network that is not attacked is not leaked. When the terminal device sends the registration request to a local network that is not attacked, the registration request carries the hidden user identity encrypted by using the first encryption key, so that the user identity information is protected.

In a possible design, the method further includes: The terminal device sends capability information to an access and mobility management network element in the macro network, where the capability information indicates that the terminal device has a capability of accessing the local network, so that a core network element in the macro network learns the capability of the terminal device.

In a possible design, the identifier of the first local network is a public land mobile network identifier PLMN ID used by the first local network.

In a possible design, the terminal device includes mobile equipment ME and a universal subscriber identity module USIM. That the terminal device receives a first encryption key from a second decryption network element in a macro network includes: The ME receives the first encryption key from the second decryption network element in the macro network. That the terminal device encrypts the user identity information by using the first encryption key, to obtain a hidden user identity includes: The ME sends the first encryption key to the USIM. The USIM encrypts the user identity information by using the first encryption key, to obtain the hidden user identity, and sends the hidden user identity to the ME. The ME receives the hidden user identity from the USIM. That the terminal device sends a registration request to the first local network includes: The ME sends the registration request to the first local network. In other words, the USIM may generate the hidden user identity based on the first encryption key when the terminal device includes the ME and the USIM and the ME receives the first encryption key.

In a possible design, the terminal device includes ME and a USIM. That the terminal device receives a first encryption key from a second decryption network element in a macro network includes: The ME receives the first encryption key from the second decryption network element in the macro network. That the terminal device encrypts the user identity information by using the first encryption key, to obtain a hidden user identity includes: The ME sends a first request to the USIM. The USIM sends the user identity information to the ME in response to the first request. The ME receives the user identity information from the USIM. The ME encrypts the user identity information by using the first encryption key, to obtain the hidden user identity. That the terminal device sends a registration request to the first local network includes: The ME sends the registration request to the first local network. In other words, the ME may generate the hidden user identity based on the first encryption key when the terminal device includes the ME and the USIM and the ME receives the first encryption key.

According to a fourth aspect, a key management method is provided. An execution body of the method may be an access and mobility management network element in a macro network, or may be a chip used in an access and mobility management network element in a macro network. Descriptions are provided below by using an example in which the execution body is an access and mobility management network element in a macro network.

The method includes: An access and mobility management network element in a macro network sends identification information of a first decryption network element to a second decryption network element in the macro network. The first decryption network element is a network element in a first local network. The access and mobility management network element in the macro network receives a first encryption key from the second decryption network element in the macro network. The first encryption key is associated with the first decryption network element. The access and mobility management network element in the macro network sends the first encryption key to a terminal device.

In other words, the access and mobility management network element in the macro network can obtain the first encryption key from the second decryption network element in the macro network, to provide the first encryption key for the terminal device, so that the terminal device encrypts user identity information by using the first encryption key, thereby obtaining the hidden user identity. In this way, decryption network elements in different local networks correspond to different encryption keys, and correspondingly, the decryption network elements in the different local networks correspond to different decryption keys. Even if a decryption network element in a specific local network is attacked, a decryption key of a decryption network element in a local network that is not attacked is not leaked. When the terminal device sends the registration request to a local network that is not attacked, the registration request carries the hidden user identity encrypted by using the first encryption key, so that the user identity information is protected.

In a possible design, the method further includes: The access and mobility management network element in the macro network obtains the identification information of the first decryption network element in a local network to which an access network device is attached. The access network device is configured to transmit the registration request of the terminal device to the access and mobility management network element in the macro network.

In other words, the access and mobility management network element in the macro network determines, based on the registration request, the access network device to which the terminal device is connected, to further obtain the identification information of the first decryption network element in the local network to which the access network device is attached.

In a possible design, the method further includes: The access and mobility management network element in the macro network determines the identification information of the first decryption network element in the first local network when the access and mobility management network element in the macro network determines that the access network device has a capability of accessing the local network. The access network device is configured to provide a communication service for the terminal device, to trigger the access and mobility management network element in the macro network to obtain the identification information of the first decryption network element in time.

In a possible design, the method further includes: The access and mobility management network element in the macro network receives capability information from the terminal device. The capability information indicates a capability of the terminal device to access the local network. The access and mobility management network element in the macro network determines the identification information of the first decryption network element in the first local network when the access and mobility management network element determines that the terminal device has the capability of accessing the local network, to trigger the access and mobility management network element in the macro network to obtain the identification information of the first decryption network element in time.

In a possible design, that an access and mobility management network element in a macro network sends identification information of a first decryption network element to a second decryption network element in the macro network includes: The access and mobility management network element in the macro network sends the identification information of the first decryption network element to the second decryption network element in the macro network by using a subscription information request. In other words, the subscription information request carries the identification information of the first decryption network element.

In a possible design, the method further includes: The access and mobility management network element in the macro network sends indication information to the second decryption network element in the macro network. The indication information indicates the second decryption network element in the macro network to provide an encryption key for the terminal device, so that the terminal device obtains the encryption key from the macro network.

In a possible design, the subscription information request includes the indication information.

In a possible design, the method further includes: The access and mobility management network element in the macro network receives a request message from the second decryption network element in the macro network. The request message is used to request the identification information of the first decryption network element.

That an access and mobility management network element in a macro network sends identification information of a first decryption network element to a second decryption network element in the macro network includes: The access and mobility management network element in the macro network sends the identification information of the first decryption network element to the second decryption network element in the macro network based on the request message.

In other words, the second decryption network element in the macro network actively triggers the access and mobility management network element in the macro network, so that the access and mobility management network element in the macro network sends the identification information of the first decryption network element to the second decryption network element in the macro network.

In a possible design, the identification information of the first decryption network element includes an identifier of the first local network and a first identifier. The first identifier identifies a decryption network element in the first local network.

According to a fifth aspect, a key management method is provided. An execution body of the method may be a second decryption network element in a macro network, or may be a chip in a second decryption network element in a macro network. Descriptions are provided below by using an example in which the execution body is a second decryption network element in a macro network.

The method includes: A second decryption network element in a macro network obtains identification information of a first decryption network element. The first decryption network element is a network element in a first local network. The second decryption network element in the macro network determines a first encryption key based on the identification information of the first decryption network element and the mapping relationship. The mapping relationship records at least one decryption network element and an encryption key corresponding to each of the at least one decryption network element, and the at least one decryption network element includes the first decryption network element. The second decryption network element in the macro network sends the first encryption key to a terminal device. The first encryption key corresponds to the first decryption network element.

In other words, when obtaining the identification information of the first decryption network element, the second decryption network element in the macro network can determine, with reference to the mapping relationship, the first encryption key corresponding to the first decryption network element, to provide the first encryption key for the terminal device, so that the terminal device encrypts user identity information by using the first encryption key, thereby obtaining a hidden user identity. In this way, decryption network elements in different local networks correspond to different encryption keys, and correspondingly, the decryption network elements in the different local networks correspond to different decryption keys. Even if a decryption network element in a specific local network is attacked, a decryption key of a decryption network element in a local network that is not attacked is not leaked. When the terminal device sends the registration request to a local network that is not attacked, the registration request carries the hidden user identity encrypted by using the first encryption key, so that the user identity information is protected.

In a possible design, that a second decryption network element in a macro network obtains identification information of a first decryption network element includes: The second decryption network element in the macro network receives the identification information of the first decryption network element from an access and mobility management network element in the macro network.

In a possible design, the method further includes: The second decryption network element in the macro network receives indication information from the access and mobility management network element in the macro network. The indication information indicates the second decryption network element in the macro network to provide an encryption key for the terminal device. That the second decryption network element in the macro network sends the first encryption key to a terminal device includes: The second decryption network element in the macro network sends the first encryption key to the terminal device based on the indication information.

In a possible design, before the second decryption network element in the macro network obtains the identification information of the first decryption network element, the method further includes: The second decryption network element in the macro network determines, based on local network subscription information of the terminal device, to send a request message to an access and mobility management network element in the macro network. The request message is used to request the identification information of the first decryption network element, to trigger the access and mobility management network element in the macro network to provide the identification information of the first decryption network element in time.

In a possible design, the method further includes: The second decryption network element in the macro network receives first information from an access and mobility management network element in the macro network. The first information includes identification information of a decryption network element corresponding to each of at least one local network, and the at least one local network includes the first local network. That a second decryption network element in a macro network obtains identification information of a first decryption network element includes: The second decryption network element in the macro network obtains the identification information of the first decryption network element from the first information based on local network subscription information of the terminal device and information about a first access network device. The first access network device is configured to provide a communication service for the terminal device.

In other words, when receiving the first information, the second decryption network element in the macro network can also autonomously determine the identification information of the first decryption network element based on the information about a first access network device.

In a possible design, that a second decryption network element in a macro network obtains identification information of a first decryption network element includes: The second decryption network element in the macro network obtains the identification information of the first decryption network element from preconfigured information based on local network subscription information of the terminal device and information about a first access network device. The preconfigured information includes identification information of a decryption network element corresponding to each of at least one local network, the at least one local network includes the first local network, and the first access network device is configured to provide a communication service for the terminal device.

In other words, when storing the preconfigured information, the second decryption network element in the macro network can also autonomously determine the identification information of the first decryption network element based on the information about a first access network device.

According to a sixth aspect, a key management method is provided. An execution body of the method may be a terminal device, or may be a chip used in a terminal device. Descriptions are provided below by using an example in which the execution body is a terminal device.

The method includes: When a terminal device needs to access a first local network, the terminal device encrypts user identity information by using a null algorithm, to obtain a hidden user identity. The terminal device sends a registration request to the first local network through an access network device. The registration request includes the hidden user identity.

In other words, the terminal device encrypts the user identity information by using the null algorithm, to obtain the hidden user identity. In this way, when the terminal device sends the registration request to the local network, the registration request carries the hidden user identity encrypted by using the null algorithm, so that the user identity information is protected.

In a possible design, that the terminal device encrypts user identity information by using a null algorithm, to obtain a hidden user identity includes: The terminal device encrypts the user identity information by using the null algorithm and a default encryption key, to obtain the hidden user identity. The hidden user identity further includes an identifier of the default encryption key, and a value of the identifier is 0. The default encryption key is a null key. For example, the default encryption key may be represented by using all bits that are all zeros.

In a possible design, the method further includes: The terminal device receives an identifier of the first local network from the access network device. The terminal device determines, in response to the identifier of the first local network, that the terminal device needs to access the first local network, to trigger performing of the following operations: encrypting the user identity information by using the null algorithm, to obtain the hidden user identity, and sending the registration request to the first local network through the access network device.

In a possible design, that the terminal device determines, in response to the identifier of the first local network, that the terminal device needs to access the first local network includes: When a preset condition is met, the terminal device determines, in response to the identifier of the first local network, that the terminal device needs to access the first local network. The preset condition includes at least one of the following:
(1) First information is preconfigured for the terminal device, where the first information indicates the terminal device to access a local network after receiving an identifier of the local network, to trigger the terminal device in time to access the local network.
(2) The terminal device finds no second network, where the second network is a network other than the first local network, to ensure continuity of a communication service of the terminal device.

In a possible design, the terminal device includes mobile equipment ME and a universal subscriber identity module USIM. That the terminal device encrypts user identity information by using a null algorithm, to obtain a hidden user identity includes: The ME sends indication information to the USIM. The USIM encrypts the user identity information by using the null algorithm in response to the indication information, to obtain the hidden user identity, and sends the hidden user identity to the ME. The ME receives the hidden user identity from the USIM. That the terminal device sends a registration request to the first local network through an access network device includes: The ME sends the registration request to the first local network through the access network device.

In other words, the USIM may generate the hidden user identity based on the null algorithm when the terminal device includes the ME and the USIM.

In a possible design, the terminal device includes ME and a USIM. That the terminal device encrypts user identity information by using a null algorithm, to obtain a hidden user identity includes: The ME sends a first request to the USIM. The USIM sends the user identity information to the ME in response to the first request. The ME receives the user identity information from the USIM. The ME encrypts the user identity information by using the null algorithm, to obtain the hidden user identity. That the terminal device sends a registration request to the first local network through an access network device includes: The ME sends the registration request to the first local network through the access network device.

In other words, the ME may generate the hidden user identity based on the null algorithm when the terminal device includes the ME and the USIM.

In a possible design, the identifier of the first local network is a public land mobile network identifier PLMN ID used by the first local network.

According to a seventh aspect, a communication apparatus is provided. The communication apparatus may be the terminal device according to any one of the first aspect or the possible designs of the first aspect, or a chip that implements a function of the terminal device. The communication apparatus includes a corresponding module, unit, or means (means) for implementing the foregoing method. The module, the unit, or the means may be implemented by hardware, software, or hardware executing corresponding software. The hardware or the software includes one or more modules or units corresponding to the foregoing functions.

The communication apparatus includes a processing module and a transceiver module. The processing module is configured to obtain identification information of a first decryption network element in a local network. The processing module is further configured to obtain, based on the identification information and a mapping relationship, a first encryption key corresponding to the first decryption network element. The mapping relationship records at least one decryption network element and an encryption key corresponding to each of the at least one decryption network element, and the at least one decryption network element includes the first decryption network element. The processing module is further configured to encrypt user identity information by using the first encryption key, to obtain a hidden user identity. The transceiver module is configured to send a registration request to a local network through an access network device, where the registration request includes the hidden user identity.

In a possible design, the processing module is configured to obtain the identification information of the first decryption network element in the local network, including: receiving a broadcast message through the transceiver module, where the broadcast message includes the identification information of the first decryption network element and an identifier of the local network.

In a possible design, the processing module is configured to obtain the identification information of the first decryption network element in the local network, including: receiving an identifier of the local network and a first identifier from an access network device through the transceiver module, where the first identifier identifies a decryption network element in the local network; and determining the identification information of the first decryption network element based on the identifier of the local network and the first identifier.

In a possible design, the identifier of the local network is a public land mobile network identifier PLMN ID used by the local network.

In a possible design, the mapping relationship is preconfigured in the communication apparatus.

In a possible design, the communication apparatus includes mobile equipment ME and a universal subscriber identity module USIM, and the mapping relationship is preconfigured in the USIM. The processing module is configured to obtain the identification information of the first decryption network element in the local network, including: controlling the ME to obtain the identification information of the first decryption network element in the local network. The processing module is configured to obtain, based on the identification information and the mapping relationship, the first encryption key corresponding to the first decryption network element, including: controlling the ME to send the identification information to the USIM. The USIM determines, based on the identification information and the mapping relationship, the first encryption key corresponding to the first decryption network element. The processing module is configured to encrypt the user identity information by using the first encryption key, to obtain the hidden user identity, including: controlling the USIM to encrypt the user identity information by using the first encryption key, to obtain the hidden user identity, and send the hidden user identity to the ME. The ME receives the hidden user identity from the USIM. The transceiver module is configured to send the registration request to the local network through the access network device, including: controlling the ME to send the registration request to the local network through the access network device.

In a possible design, the communication apparatus includes ME and a USIM, and the mapping relationship is preconfigured in the USIM. The processing module is configured to obtain the identification information of the first decryption network element in the local network, including: controlling the ME to obtain the identification information of the first decryption network element in the local network. The processing module is configured to obtain, based on the identification information and the mapping relationship, the first encryption key corresponding to the first decryption network element, including: controlling the ME to send a first request to the USIM. The USIM sends the mapping relationship and the user identity information to the ME in response to the first request. The ME receives the mapping relationship and user identity information from the USIM. The ME determines, based on the identification information and the mapping relationship, the first encryption key corresponding to the first decryption network element. The processing module is configured to encrypt the user identity information by using the first encryption key, to obtain the hidden user identity, including: controlling the ME to encrypt the user identity information by using the first encryption key, to obtain the hidden user identity. The transceiver module is configured to send the registration request to the local network through the access network device, including: controlling the ME to send the registration request to the local network through the access network device.

In a possible design, the transceiver module is further configured to receive the mapping relationship from a second decryption network element in a macro network through the access network device.

In a possible design, the mapping relationship is carried in a registration accept message.

In a possible design, the mapping relationship is carried in a user equipment configuration update command message.

In a possible design, the communication apparatus includes ME and a USIM. The processing module is configured to obtain the identification information of the first decryption network element in the local network, including: controlling the ME to obtain the identification information of the first decryption network element in the local network. The transceiver module is configured to receive the mapping relationship from the second decryption network element in the macro network through the access network device, including: controlling the ME to receive the mapping relationship from the second decryption network element in the macro network through the access network device. The processing module is configured to obtain, based on the identification information and the mapping relationship, the first encryption key corresponding to the first decryption network element, including: controlling the ME to determine, based on the identification information and the mapping relationship, the first encryption key corresponding to the first decryption network element. The processing module is configured to encrypt the user identity information by using the first encryption key, to obtain the hidden user identity, including: controlling the ME to send a second request to the USIM. The USIM sends the user identity information to the ME in response to the second request. The ME receives the user identity information from the USIM. The ME encrypts the user identity information by using the first encryption key, to obtain the hidden user identity. The transceiver module is configured to send the registration request to the local network through the access network device, including: controlling the ME to send the registration request to the local network through the access network device.

In a possible design, the communication apparatus includes ME and a USIM. The processing module is configured to obtain the identification information of the first decryption network element in the local network, including: controlling the ME to obtain the identification information of the first decryption network element in the local network. The sending module is configured to receive the mapping relationship from the second decryption network element in the macro network through the access network device, including: controlling the ME to receive the mapping relationship from the second decryption network element in the macro network through the access network device. The processing module is configured to obtain, based on the identification information and the mapping relationship, the first encryption key corresponding to the first decryption network element, including: controlling the ME to determine, based on the identification information and the mapping relationship, the first encryption key corresponding to the first decryption network element. The processing module is configured to encrypt the user identity information by using the first encryption key, to obtain the hidden user identity, including: controlling the ME to send the first encryption key to the USIM. The USIM receives the first encryption key from the ME. The USIM encrypts the user identity information by using the first encryption key, to obtain the hidden user identity, and sends the hidden user identity to the ME. The ME receives the hidden user identity from the USIM. The transceiver module is configured to send the registration request to the local network through the access network device, including: controlling the ME to send the registration request to the local network through the access network device.

In a possible design, the transceiver module is further configured to send capability information to an access and mobility management network element in the macro network. The capability information indicates that the communication apparatus has a capability of accessing the local network.

According to an eighth aspect, a communication apparatus is provided. The communication apparatus may be the access network device according to any one of the second aspect or the possible designs of the second aspect, or a chip that implements a function of the access network device. The communication apparatus includes a corresponding module, unit, or means (means) for implementing the foregoing method. The module, the unit, or the means may be implemented by hardware, software, or hardware executing corresponding software. The hardware or the software includes one or more modules or units corresponding to the foregoing functions.

The communication apparatus includes a processing module and a transceiver module. In a process of establishing a backhaul link between the communication apparatus and a core network element in a local network, the processing module is configured to obtain identification information of a first decryption network element in the local network. The transceiver module is configured to send the identification information of the first decryption network element.

In a possible design, the transceiver module is configured to send the identification information of the first decryption network element, including: sending a broadcast message, where the broadcast message includes the identification information of the first decryption network element and an identifier of the local network.

In a possible design, the transceiver module is configured to send the identification information of the first decryption network element, including: sending an identifier of the local network and a first identifier, where the identifier of the local network and the first identifier are used to determine the identification information of the first decryption network element.

In a possible design, the identifier of the local network is a public land mobile network identifier PLMN ID used by the local network.

In a possible design, the processing module is configured to establish the backhaul link to the core network element in the local network when a connection between the communication apparatus and a core network element in a macro network is broken.

In a possible design, the processing module is further configured to establish an internet protocol security IPsec link to the core network element in the local network. The backhaul link includes the IPsec link. The processing module is configured to obtain the identification information of the first decryption network element in the local network, including: receiving the identification information of the first decryption network element from the core network element in the local network through the transceiver module by using an internet key exchange protocol security association initial IKE_SA_INIT message or an internet key exchange protocol authentication IKE_AUTH message.

In a possible design, the processing module is further configured to establish a datagram transport layer security DTLS link to the core network element in the local network. The backhaul link includes the DTLS link. The processing module is configured to obtain the identification information of the first decryption network element in the local network, including: receiving the identification information of the first decryption network element from the core network element in the local network through the transceiver module by using a handshake message.

According to a ninth aspect, a communication apparatus is provided. The communication apparatus may be the terminal device according to any one of the third aspect or the possible designs of the third aspect, or a chip that implements a function of the terminal device. The communication apparatus includes a corresponding module, unit, or means (means) for implementing the foregoing method. The module, the unit, or the means may be implemented by hardware, software, or hardware executing corresponding software. The hardware or the software includes one or more modules or units corresponding to the foregoing functions.

The communication apparatus includes a processing module and a transceiver module. The transceiver module is configured to receive a first encryption key from a second decryption network element in a macro network. There is a correspondence between the first encryption key and a first local network. When the communication apparatus receives an identifier of the first local network, the processing module is configured to encrypt user identity information by using the first encryption key, to obtain a hidden user identity. The transceiver module is configured to send a registration request to the first local network. The registration request includes the hidden user identity.

In a possible design, the transceiver module is further configured to send capability information to an access and mobility management network element in the macro network. The capability information indicates that the communication apparatus has a capability of accessing the local network.

In a possible design, the identifier of the first local network is a public land mobile network identifier PLMN ID used by the first local network.

In a possible design, the communication apparatus includes mobile equipment ME and a universal subscriber identity module USIM. The transceiver module is configured to receive the first encryption key from the second decryption network element in the macro network, including: controlling the ME to receive the first encryption key from the second decryption network element in the macro network. The processing module is configured to encrypt the user identity information by using the first encryption key, to obtain the hidden user identity, including: controlling the ME to send the first encryption key to the USIM. The USIM encrypts the user identity information by using the first encryption key, to obtain the hidden user identity, and sends the hidden user identity to the ME. The ME receives the hidden user identity from the USIM. The transceiver module is configured to send the registration request to the first local network, including: controlling the ME to send the registration request to the first local network.

In a possible design, the communication apparatus includes ME and a USIM. The transceiver module is configured to receive the first encryption key from the second decryption network element in the macro network, including: controlling the ME to receive the first encryption key from the second decryption network element in the macro network. The processing module is configured to encrypt the user identity information by using the first encryption key, to obtain the hidden user identity, including: controlling the ME to send a first request to the USIM. The USIM sends the user identity information to the ME in response to the first request. The ME receives the user identity information from the USIM. The ME encrypts the user identity information by using the first encryption key, to obtain the hidden user identity. The transceiver module is configured to send the registration request to the first local network, including: controlling the ME to send the registration request to the first local network.

According to a tenth aspect, a communication apparatus is provided. The communication apparatus may be the access and mobility management network element in the macro network according to any one of the fourth aspect or the possible designs of the fourth aspect, or a chip that implements a function of the access and mobility management network element in the macro network. The communication apparatus includes a corresponding module, unit, or means (means) for implementing the foregoing method. The module, the unit, or the means may be implemented by hardware, software, or hardware executing corresponding software. The hardware or the software includes one or more modules or units corresponding to the foregoing functions.

The communication apparatus includes a processing module and a transceiver module. The transceiver module is configured to send identification information of a first decryption network element to a second decryption network element in a macro network. The first decryption network element is a network element in a first local network. The transceiver module is further configured to receive a first encryption key from the second decryption network element in the macro network. The first encryption key is associated with the first decryption network element. The transceiver module is further configured to send the first encryption key to a terminal device. The processing module controls the transceiver module to perform the foregoing processing steps.

In a possible design, the processing module is further configured to obtain the identification information of the first decryption network element in a local network to which an access network device is attached. The access network device is configured to transmit a registration request of the terminal device to the communication apparatus.

In a possible design, the processing module is configured to determine the identification information of the first decryption network element in the first local network when the communication apparatus determines that the access network device has a capability of accessing the local network. The access network device is configured to provide a communication service for the terminal device.

In a possible design, the transceiver module is configured to receive capability information from the terminal device. The capability information indicates a capability of the terminal device to access the local network. The processing module is further configured to determine that the terminal device has a capability of accessing the local network, and when the terminal device has the capability of accessing the local network, determine the identification information of the first decryption network element in the first local network.

In a possible design, the transceiver module is configured to send the identification information of the first decryption network element to the second decryption network element in the macro network, including: sending the identification information of the first decryption network element to the second decryption network element in the macro network by using a subscription information request.

In a possible design, the transceiver module is further configured to send indication information to the second decryption network element in the macro network. The indication information indicates the second decryption network element in the macro network to provide an encryption key for the terminal device.

In a possible design, the subscription information request includes the indication information.

In a possible design, the transceiver module is configured to receive a request message from the second decryption network element in the macro network. The request message is used to request the identification information of the first decryption network element. The transceiver module is configured to send the identification information of the first decryption network element to the second decryption network element in the macro network, including: sending the identification information of the first decryption network element to the second decryption network element in the macro network based on the request message.

In a possible design, the identification information of the first decryption network element includes an identifier of the first local network and a first identifier. The first identifier identifies a decryption network element in the first local network.

According to an eleventh aspect, a communication apparatus is provided. The communication apparatus may be the second decryption network element in the macro network according to any one of the fifth aspect or the possible designs of the fifth aspect, or a chip that implements a function of the second decryption network element in the macro network. The communication apparatus includes a corresponding module, unit, or means (means) for implementing the foregoing method. The module, the unit, or the means may be implemented by hardware, software, or hardware executing corresponding software. The hardware or the software includes one or more modules or units corresponding to the foregoing functions.

The communication apparatus includes a processing module and a transceiver module. The processing module is configured to obtain identification information of a first decryption network element. The first decryption network element is a network element in a first local network. The processing module is further configured to determine a first encryption key based on the identification information of the first decryption network element and a mapping relationship. The mapping relationship records at least one decryption network element and an encryption key corresponding to each of the at least one decryption network element, and the at least one decryption network element includes the first decryption network element. The transceiver module is configured to send the first encryption key to a terminal device. The first encryption key corresponds to the first decryption network element.

In a possible design, the processing module is configured to obtain the identification information of the first decryption network element, including: receiving the identification information of the first decryption network element from an access and mobility management network element in the macro network through the transceiver module.

In a possible design, the transceiver module is further configured to receive indication information from an access and mobility management network element in the macro network. The indication information indicates the communication apparatus to provide an encryption key for the terminal device. The transceiver module is configured to send the first encryption key to the terminal device, including: sending the first encryption key to the terminal device based on the indication information.

In a possible design, the processing module is further configured to determine, based on local network subscription information of the terminal device before obtaining the identification information of the first decryption network element, to send a request message to an access and mobility management network element in the macro network. The request message is used to request the identification information of the first decryption network element.

In a possible design, the transceiver module is further configured to receive first information from an access and mobility management network element in the macro network. The first information includes identification information of a decryption network element corresponding to each of at least one local network, and the at least one local network includes the first local network. The processing module is configured to obtain the identification information of the first decryption network element, including: obtaining the identification information of the first decryption network element from the first information based on local network subscription information of the terminal device and information about a first access network device. The first access network device is configured to provide a communication service for the terminal device.

In a possible design, the processing module is configured to obtain the identification information of the first decryption network element, including: obtaining the identification information of the first decryption network element from preconfigured information based on local network subscription information of the terminal device and information about a first access network device. The preconfigured information includes identification information of a decryption network element corresponding to each of at least one local network, the at least one local network includes the first local network, and the first access network device is configured to provide a communication service for the terminal device.

According to a twelfth aspect, a communication apparatus is provided. The communication apparatus may be the terminal device according to any one of the sixth aspect or the possible designs of the sixth aspect, or a chip that implements a function of the terminal device. The communication apparatus includes a corresponding module, unit, or means (means) for implementing the foregoing method. The module, the unit, or the means may be implemented by hardware, software, or hardware executing corresponding software. The hardware or the software includes one or more modules or units corresponding to the foregoing functions.

The communication apparatus includes a processing module and a transceiver module. The processing module is configured to encrypt user identity information by using a null algorithm when a first local network needs to be accessed, to obtain a hidden user identity. The transceiver module is configured to send a registration request to the first local network through an access network device. The registration request includes the hidden user identity.

In a possible design, the processing module is configured to encrypt the user identity information by using the null algorithm, to obtain the hidden user identity, including: encrypting the user identity information by using the null algorithm and a default encryption key, to obtain the hidden user identity. The hidden user identity further includes an identifier of the default encryption key, and a value of the identifier is 0. The default encryption key is a null key. For example, the default encryption key may be represented by using all bits that are all zeros.

In a possible design, the transceiver module is further configured to receive an identifier of the first local network from the access network device. The processing module is configured to determine, in response to the identifier of the first local network, that the first local network needs to be accessed, to trigger performing of the following operations: encrypting the user identity information by using the null algorithm, to obtain the hidden user identity, and sending the registration request to the first local network through the access network device.

In a possible design, the processing module is configured to determine, in response to the identifier of the first local network, that the first local network needs to be accessed, including: when a preset condition is met, determining, in response to the identifier of the first local network, that the first local network needs to be accessed. The preset condition includes at least one of the following:
(1) First information is preconfigured for the communication apparatus, where the first information indicates the communication apparatus to access a local network after receiving an identifier of the local network.
(2) The transceiver module finds no second network, where the second network is a network other than the first local network.

In a possible design, the communication apparatus includes mobile equipment ME and a universal subscriber identity module USIM. The processing module is configured to encrypt the user identity information by using the null algorithm, to obtain the hidden user identity, including: controlling the ME to send indication information to the USIM. The USIM encrypts the user identity information by using the null algorithm in response to the indication information, to obtain the hidden user identity, and sends the hidden user identity to the ME. The ME receives the hidden user identity from the USIM. The transceiver module is configured to send the registration request to the first local network through the access network device, including: controlling the ME to send the registration request to the first local network through the access network device.

In a possible design, the communication apparatus includes ME and a USIM. The processing module is configured to encrypt the user identity information by using the null algorithm, to obtain the hidden user identity, including: controlling the ME to send a first request to the USIM. The USIM sends the user identity information to the ME in response to the first request. The ME receives the user identity information from the USIM. The ME encrypts the user identity information by using the null algorithm, to obtain the hidden user identity. The transceiver module is configured to send the registration request to the first local network through the access network device, including: controlling the ME to send the registration request to the first local network through the access network device.

In a possible design, the identifier of the first local network is a public land mobile network identifier PLMN ID used by the first local network.

According to a thirteenth aspect, a communication apparatus is provided. The communication apparatus includes a processor and a memory. The memory is configured to store computer instructions. When the processor executes the instructions, the communication apparatus is enabled to perform the method performed by the terminal device according to any one of the foregoing aspects or any possible design of any one of the foregoing aspects. The communication apparatus may be the terminal device according to any one of the first aspect or the possible designs of the first aspect, the terminal device according to any one of the third aspect or the possible designs of the third aspect, the terminal device according to any one of the sixth aspect or the possible designs of the sixth aspect, or a chip that implements a function of the terminal device.

According to a fourteenth aspect, a communication apparatus is provided. The communication apparatus includes a processor. The processor is coupled to a memory, and is configured to read and execute instructions in the memory, to enable the communication apparatus to perform the method performed by the terminal device according to any one of the foregoing aspects or any possible design of any one of the foregoing aspects. The communication apparatus may be the terminal device according to any one of the first aspect or the possible designs of the first aspect, the terminal device according to any one of the third aspect or the possible designs of the third aspect, the terminal device according to any one of the sixth aspect or the possible designs of the sixth aspect, or a chip that implements a function of the terminal device.

According to a fifteenth aspect, a chip is provided. The chip includes a processing circuit and an input/output interface. The input/output interface is configured to communicate with a module outside the chip. For example, the chip may be a chip that implements a function of the terminal device according to any one of the first aspect or the possible designs of the first aspect. The processing circuit is configured to run a computer program or instructions, to implement the method according to any one of the first aspect or the possible designs of the first aspect. For another example, the chip may be a chip that implements a function of the terminal device according to any one of the third aspect or the possible designs of the third aspect. The processing circuit is configured to run a computer program or instructions, to implement the method according to any one of the third aspect or the possible designs of the third aspect. In still another example, the chip may be a chip that implements a function of the terminal device according to any one of the sixth aspect or the possible designs of the sixth aspect. The processing circuit is configured to run a computer program or instructions, to implement the method according to any one of the sixth aspect or the possible designs of the sixth aspect.

According to a sixteenth aspect, a communication apparatus is provided. The communication apparatus includes a processor and a memory. The memory is configured to store computer instructions. When the processor executes the instructions, the communication apparatus is enabled to perform the method performed by the access network device according to any one of the foregoing aspects or any possible design of any one of the foregoing aspects. The communication apparatus may be the access network device according to any one of the second aspect or the possible designs of the second aspect, or a chip that implements a function of the access network device.

According to a seventeenth aspect, a communication apparatus is provided. The communication apparatus includes a processor. The processor is coupled to a memory, and is configured to read and execute instructions in the memory, to enable the communication apparatus to perform the method performed by the access network device according to any one of the foregoing aspects or any possible design of any one of the foregoing aspects. The communication apparatus may be the access network device according to any one of the second aspect or the possible designs of the second aspect, or a chip that implements a function of the access network device.

According to an eighteenth aspect, a chip is provided. The chip includes a processing circuit and an input/output interface. The input/output interface is configured to communicate with a module outside the chip. For example, the chip may be a chip that implements a function of the access network device according to any one of the second aspect or the possible designs of the second aspect. The processing circuit is configured to run a computer program or instructions, to implement the method according to any one of the second aspect or the possible designs of the second aspect.

According to a nineteenth aspect, a communication apparatus is provided. The communication apparatus includes a processor and a memory. The memory is configured to store computer instructions. When the processor executes the instructions, the communication apparatus is enabled to perform the method performed by the access and mobility management network element in the macro network according to any one of the foregoing aspects or any possible design of any one of the foregoing aspects. The communication apparatus may be the access and mobility management network element in the macro network according to any one of the fourth aspect or the possible designs of the fourth aspect, or a chip that implements a function of the access and mobility management network element in the macro network.

According to a twentieth aspect, a communication apparatus is provided. The communication apparatus includes a processor. The processor is coupled to a memory, and is configured to read and execute instructions in the memory, to enable the communication apparatus to perform the method performed by the access and mobility management network element in the macro network according to any one of the foregoing aspects or any possible design of any one of the foregoing aspects. The communication apparatus may be the access and mobility management network element in the macro network according to any one of the fourth aspect or the possible designs of the fourth aspect, or a chip that implements a function of the access and mobility management network element in the macro network.

According to a twenty-first aspect, a chip is provided. The chip includes a processing circuit and an input/output interface. The input/output interface is configured to communicate with a module outside the chip. For example, the chip may be a chip that implements a function of the access and mobility management network element in the macro network according to any one of the fourth aspect or the possible designs of the fourth aspect. The processing circuit is configured to run a computer program or instructions, to implement the method according to any one of the fourth aspect or the possible designs of the fourth aspect.

According to a twenty-second aspect, a communication apparatus is provided. The communication apparatus includes a processor and a memory. The memory is configured to store computer instructions. When the processor executes the instructions, the communication apparatus is enabled to perform the method performed by the second decryption network element in the macro network according to any one of the foregoing aspects or any possible design of any one of the foregoing aspects. The communication apparatus may be the second decryption network element in the macro network according to any one of the fifth aspect or the possible designs of the fifth aspect, or a chip that implements a function of the second decryption network element in the macro network.

According to a twenty-third aspect, a communication apparatus is provided. The communication apparatus includes a processor. The processor is coupled to a memory, and is configured to read and execute instructions in the memory, to enable the communication apparatus to perform the method performed by the second decryption network element in the macro network according to any one of the foregoing aspects or any possible design of any one of the foregoing aspects. The communication apparatus may be the second decryption network element in the macro network according to any one of the fifth aspect or the possible designs of the fifth aspect, or a chip that implements a function of the second decryption network element in the macro network.

According to a twenty-fourth aspect, a chip is provided. The chip includes a processing circuit and an input/output interface. The input/output interface is configured to communicate with a module outside the chip. For example, the chip may be a chip that implements a function of the second decryption network element in the macro network according to any one of the fifth aspect or the possible designs of the fifth aspect. The processing circuit is configured to run a computer program or instructions, to implement the method according to any one of the fifth aspect or the possible designs of the fifth aspect.

According to a twenty-fifth aspect, a computer-readable storage medium is provided. The computer-readable storage medium stores instructions. When the instructions are run on a computer, the computer may be enabled to perform the method according to any one of the possible designs of the foregoing aspects.

According to a twenty-sixth aspect, a computer program product including instructions is provided. When the computer program product runs on a computer, the computer is enabled to perform the method according to any one of the possible designs of the foregoing aspects.

According to a twenty-seventh aspect, a circuit system is provided. The circuit system includes a processing circuit, and the processing circuit is configured to perform the method according to any one of the possible designs of the foregoing aspects.

For technical effects brought by any design of the seventh aspect to the twenty-seventh aspect, refer to beneficial effects in corresponding methods provided above. Details are not described herein again.

### BRIEF DESCRIPTION OF DRAWINGS

FIG. 1a is a diagram of an architecture according to an embodiment of this application;
FIG. 1b is a diagram of another architecture according to an embodiment of this application;
FIG. 2 is a diagram of an IOPS scenario according to an embodiment of this application;
FIG. 3 is a diagram of another IOPS scenario according to an embodiment of this application;
FIG. 4 is a schematic flowchart of key separation according to an embodiment of this application;
FIG. 5 is a diagram of a key separation scenario according to an embodiment of this application;
FIG. 6 is another schematic flowchart of key separation according to an embodiment of this application;
FIG. 7a is still another schematic flowchart of key separation according to an embodiment of this application;
FIG. 7b is still another schematic flowchart of key separation according to an embodiment of this application;
FIG. 7c is still another schematic flowchart of key separation according to an embodiment of this application;
FIG. 7d is still another schematic flowchart of key separation according to an embodiment of this application;
FIG. 8 is still another schematic flowchart of key separation according to an embodiment of this application;
FIG. 9 is still another schematic flowchart of key separation according to an embodiment of this application;
FIG. 10 is still another schematic flowchart of key separation according to an embodiment of this application;
FIG. 11 is still another schematic flowchart of key separation according to an embodiment of this application;
FIG. 12 is still another schematic flowchart of key separation according to an embodiment of this application;
FIG. 13 is still another schematic flowchart of key separation according to an embodiment of this application;
FIG. 14 is still another schematic flowchart of key separation according to an embodiment of this application;
FIG. 15 is still another schematic flowchart of key separation according to an embodiment of this application;
FIG. 16 is still another schematic flowchart of key separation according to an embodiment of this application;
FIG. 17 is still another schematic flowchart of key separation according to an embodiment of this application;
FIG. 18 is still another schematic flowchart of key separation according to an embodiment of this application;
FIG. 19 is still another schematic flowchart of key separation according to an embodiment of this application;
FIG. 20 is a diagram of a structure of a communication apparatus according to an embodiment of this application; and
FIG. 21 is a diagram of a structure of another communication apparatus according to an embodiment of this application.

### DESCRIPTION OF EMBODIMENTS

In the specification and accompanying drawings of this application, the terms "first", "second", and the like are intended to distinguish between different objects or distinguish between different processing of a same object, but do not indicate a particular order of the objects. In addition, terms "including", "having", or any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, terms such as "example" or "for example" are used to represent giving an example, an illustration, or a description. Any embodiment or design scheme described as "example" or "for example" in embodiments of this application should not be explained as being more preferred or having more advantages than another embodiment or design scheme. Exactly, use of the term "example", "for example", or the like is intended to present a related concept in a specific manner. In embodiments of this application, "more than two" includes two. A plurality may include two, may include three, or may include more.

The technical solutions in embodiments of this application may be applied to various communication systems, for example, a 5th generation (5th generation, 5G) system, a new radio (new radio, NR) system, or a long term evolution (long term evolution, LTE) system. The technical solutions provided in this application may be further applied to a future communication system, for example, a 6th generation mobile communication system. The technical solutions in embodiments of this application may be further applied to a device-to-device (device-to-device, D2D) communication system, a vehicle-to-everything (vehicle-to-everything, V2X) communication system, a machine-to-machine (machine-to-machine, M2M) communication system, a machine type communication (machine type communication, MTC) system, and an internet of things (internet of things, IoT) communication system, or another communication system.

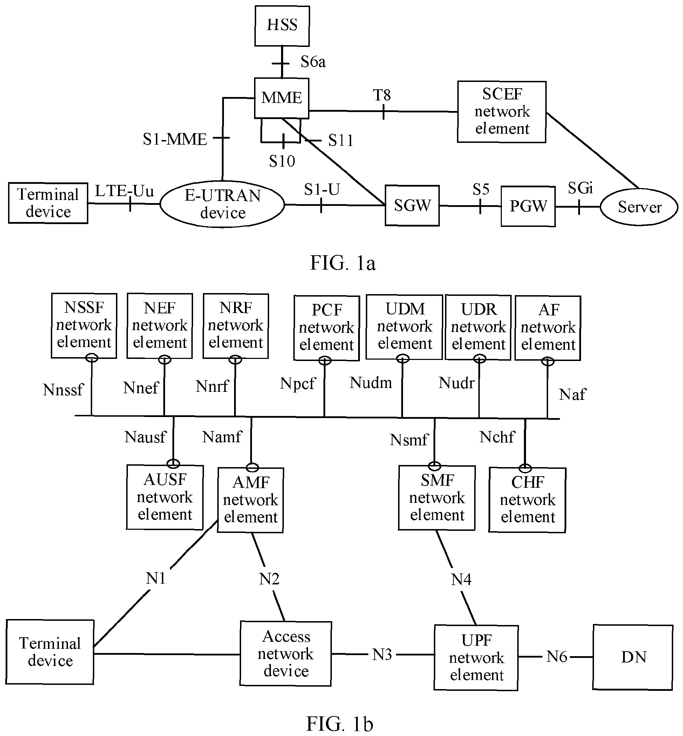

For ease of understanding of embodiments of this application, a communication system to which embodiments of this application are applicable is first simply described with reference to FIG. 1a and FIG. 1b.

FIG. 1a is a diagram of an architecture of an LTE system. As shown in FIG. 1a, the LTE system includes network elements or devices such as a terminal device, an evolved universal mobile telecommunications system (universal mobile telecommunications system, UMTS) terrestrial radio access network (evolved UMTS territorial radio access network, E-UTRAN) device, a mobility management entity (mobility management entity, MME), a serving gateway (serving gateway, SGW), a packet data network (packet data network, PDN) gateway (PDN gateway, PGW), a service capability exposure function (service capability exposure function, SCEF) network element, and a home subscriber server (home subscriber server, HSS).

The terminal device may be a terminal device having a transceiver function, or may be a chip or a chip system that may be disposed in the terminal device. The terminal device may also be referred to as user equipment (user equipment, UE), an access terminal, a subscriber unit (subscriber unit), a subscriber station, a mobile station (mobile station, MS), a mobile console, a remote station, a remote terminal, a mobile device, a user terminal, a terminal, a wireless communication device, a user agent, or a user apparatus. The terminal device in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. Alternatively, the terminal device in this application may be a vehicle-mounted module, a vehicle-mounted module, a vehicle-mounted part, a vehicle-mounted chip, or a vehicle-mounted unit that is built in a vehicle as one or more parts or units.

The terminal device accesses the E-UTRAN device through LTE-Uu. The E-UTRAN device may be an evolved NodeB (evolved NodeB, eNB) or a next generation-eNB (next generation-eNB, ng-eNB). The E-UTRAN device is mainly configured to provide a network access function for a terminal device in a specific area, for example, a network signal coverage area of the E-UTRAN device, so that the terminal device can access, through the E-UTRAN device, and be attached to a 4G network. The E-UTRAN device communicates with the MME through an S1-MME, and communicates with the SGW through S1-U. The MME is mainly responsible for functions such as mobility management, bearing management, user authentication, and SGW selection. Different MMEs communicate with each other through S10 (FIG. 1a shows only one MME as an example). The MME communicates with the HSS through S6a, the MME communicates with the SGW through S11, the MME communicates with the SCEF network element through T8, the SCEF network element communicates with a server, the SGSN communicates with the MME by using S3, an SGSN communicates with the SGW through S4, the SGW communicates with the PGW through S5, and the PGW accesses the server through SGi.

It should be understood that, in FIG. 1a, the E-UTRAN device is an access network device. The SGW, the PGW, the MME, the SCEF network element, the HSS network element, and the server are all core network devices. In embodiments of this application, a core network device in the 4G network may also be described as an evolved packet core network (evolved packet core network, EPC).

FIG. 1b is a diagram of an architecture of a 5G system. As shown in FIG. 1b, the 5G system includes an access network (access network, AN) and a core network (core network, CN), and may further include a terminal device.

For a specific function of the terminal device in the 5G system, refer to related descriptions in the foregoing 4G system. Details are not described again.

The AN is used to implement an access-related function, may provide a network access function for an authorized user in a specific area, and can determine transmission links with different quality based on a user level, a service requirement, and the like, to transmit user data. The AN forwards a control signal and the user data between the terminal device and the CN. The AN may include an access network device, which may also be referred to as a radio access network (radio access network, RAN) device.

The RAN device (RAN for short, or AN) may be a device that provides access for the terminal device, and is mainly responsible for functions such as radio resource management, quality of service (quality of service, QoS) management, and data compression and encryption on an air interface side. The RAN device may include a gNB in 5G, for example, a new radio (new radio, NR) system, or one or a group (including a plurality of antenna panels) of antenna panels of a base station in 5G, or may be a network node, for example, a baseband unit (baseband unit, BBU), a central unit (central unit, CU) or a distributed unit (distributed unit, DU), an RSU having a base station function, a wired access gateway, or a 5G core network element, that forms a gNB, a transmission point (transmission and reception point, TRP, or transmission point, TP), or a transmission measurement function (transmission measurement function, TMF). Alternatively, the RAN device may include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, or the like. Alternatively, the RAN device may include a next-generation mobile communication system, for example, a 6G access network device such as a 6G base station. Alternatively, in the next-generation mobile communication system, the network device may be named in another manner, which falls within the protection scope of embodiments of this application. This is not limited in this application.

The CN is mainly responsible for maintaining subscription data of a mobile network, and provides functions such as session management, mobility management, policy management, and security authentication for the terminal device. The CN mainly includes the following network elements: a user plane function (user plane function, UPF) network element, an authentication server function (authentication server function, AUSF) network element, an access and mobility management function (access and mobility management function, AMF) network element, a session management function (session management function, SMF) network element, a network slice selection function (network slice selection function, NSSF) network element, a network exposure function (network exposure function, NEF) network element, a network function repository function (NF repository function, NRF) network element, a policy control function (policy control function, PCF) network element, a unified data management (unified data management, UDM) network element, a unified data repository (unified data repository, UDR) network element, an application function (application function, AF) network element, and a charging function (charging function, CHF) network element.

It should be noted that the CN may be classified into a macro core network (for example, a macro EPC or a macro 5GC) and a local core network (which may also be referred to as a local network, for example, a private network or an IOPS network) based on deployment locations, a deployment location of the macro core network is mostly located in a core equipment room of an operator and is relatively far away from an access network device (for example, an eNB, a RAN, or a gNB), and the local core network (for example, an IOPS EPC, an IOPS 5GC, or a private network) may be deployed at a location relatively close to the access network device, and therefore, the IOPS network (including the EPC and 5GC) and the private network may also be understood as a local network or the local core network. During actual application, the macro core network and the local core network may also be distinguished based on a size of a network scale. For example, the macro core network serves more users than the local core network, the macro core network may provide more network functions than the local core network, or the macro core network includes more core network elements than the local core network. The macro core network and the local core network may alternatively be distinguished based on a network function. For example, the macro core network serves a non-public safety (public safety) user and the local core network serves a public safety user, or the macro core network does not serve a specific enterprise user and the local core network serves a specific enterprise user.

The UPF network element is mainly responsible for user data processing (forwarding, receiving, charging, and the like). For example, the UPF network element may receive user data from a data network (data network, DN), and forward the user data to the terminal device through the access network device. The UPF network element may further receive user data from the terminal device through the access network device, and forward the user data to the DN. A DN network element is an operator network that provides a data transmission service for a user, for example, an internet protocol (internet protocol, IP) multi-media service (IP multi-media service, IMS), and an internet (internet). The DN may be an external network of an operator, or may be a network controlled by the operator, and is configured to provide a business service for the terminal device.

The AUSF network element is mainly configured to perform security authentication on the terminal device.

The AMF network element is mainly used for mobility management in the mobile network, for example, user location update, registration of a user to a network, and user handover.

The SMF network element is mainly used for session management in the mobile network, for example, session establishment, modification, and release. A specific function is, for example, allocating an internet protocol (internet protocol, IP) address to the user, or selecting a UPF that provides a packet forwarding function.

The PCF network element mainly supports providing a unified policy framework to control network behavior, and providing a policy rule for a control layer network function, and is responsible for obtaining user subscription information related to policy decision-making. The PCF network element may provide a policy, for example, a quality of service (quality of service, QoS) policy or a slice selection policy, to the AMF network element and the SMF network element.

The NSSF network element is mainly configured to select a network slice for the terminal device.

The NEF network element is mainly configured to support capability and event exposure.

The NRF network element is mainly configured to support a service discovery function, and maintain network function (network function, NF) text of available NF instances and services supported by the NF instances.

The UDM network element is mainly configured to store user data, for example, subscription data and authentication/authorization data.

The UDR network element is mainly configured to store structured data. Stored content includes subscription data, policy data, externally exposed structured data, and application-related data.

The AF network element mainly supports interaction with the CN to provide a service, for example, affecting data routing decision-making and a policy control function, or providing some third-party services for a network side.

In the network architecture shown in FIG. 1b, the network elements may communicate with each other through interfaces shown in the figure, and some interfaces may be implemented in a manner of non-service-based interfaces. As shown in FIG. 1b, the terminal device and the AMF network element may interact with each other through an N1 interface. An interaction message may be referred to as, for example, an N1 message (N1 Message). The access network device and the AMF network element may interact with each other through an N2 interface. The N2 interface may be used to send a non-access stratum (non-access stratum, NAS) message and the like. The access network device and the UPF network element may interact with each other through an N3 interface. The N3 interface may be used to transmit user plane data and the like. The SMF network element and the UPF network element may interact with each other through an N4 interface. The N4 interface may be used to transmit information such as tunnel identifier information of an N3 connection, data buffering indication information, and a downlink data notification message. The UPF network element and the DN may interact with each other through an N6 interface. The N6 interface may be used to transmit user plane data and the like.

In addition, network elements of a control plane function in FIG. 1b may alternatively communicate with each other through a service-based interface. For example, the AMF network element accesses a service-based architecture through an Namf interface, and provides a corresponding service, and the SMF network element accesses the service-based architecture through an Nsmf interface, and provides a corresponding service. Similarly, the AUSF network element, the CHF network element, the NSSF network element, the NEF network element, the NRF network element, the PCF network element, the UDM network element, the UDR network element, and the AF network element access the service-based architecture through respective corresponding interfaces, and provide corresponding services. Details are not described herein. A relationship between other interfaces and the network elements is shown in FIG. 1b. For brevity, details are not described herein.

It should be understood that, in FIG. 1b, a network element in the CN may be described as a core network element or a core network device. In embodiments of this application, the core network element and the core network device may be replaced with each other.

It should be further understood that the names are defined merely for ease of distinguishing between different functions, and should not constitute any limitation on this application. This application does not exclude a possibility that another name is used in the 5G network and another future network. For example, in the 6G network, some or all of the foregoing network elements may still use terms in 5G, or may use other names.

It should be further understood that, names of interfaces between the network elements in FIG. 1a or FIG. 1b are merely an example. During specific implementation, the names of the interfaces may be other names. This is not specifically limited in this application. In addition, names of messages (or signaling) transmitted between the foregoing network elements are merely an example, and do not constitute any limitation on functions of the messages.

To facilitate understanding of embodiments of this application, the following briefly describes related technologies in this application.

### 1. IOPS

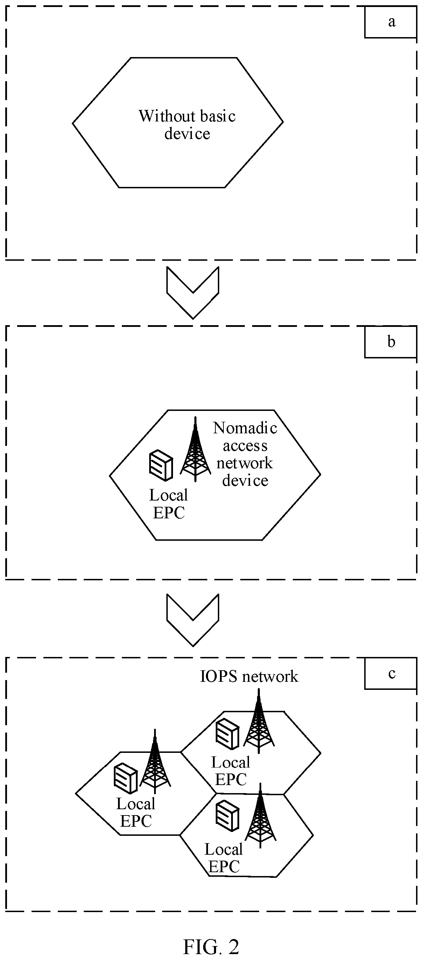

A scenario shown in FIG. 2 is applicable to a case in which deployment of an evolved packet system (evolved packet system, EPS) is not fixed. The unfixed EPS deployment includes a nomadic EPC (nomadic EPC) device and an access network device, which may be denoted as Nomadic EPC + eNB, as shown in a in FIG. 2. In this case, an access network device that has an IOPS function may be deployed, and the access network device that has the IOPS function is used to implement an access network without backhaul, and provide a local connection and a service for a public safety user (public safety user), as shown in b and c in FIG. 2.

It should be noted that a deployment location of a core network element in a macro network (for example, a macro EPC) is mostly located in a core equipment room of an operator and is relatively far away from an access network device (for example, an eNB), but a deployment location of an IOPS network (namely, an IOPS EPC) is relatively closed to the access network device, and therefore, the IOPS network may also be understood as a local network or a local core network. In embodiments of this application, the IOPS network may also be used to represent another local core network, for example, an IOPS 5GC or a private network.

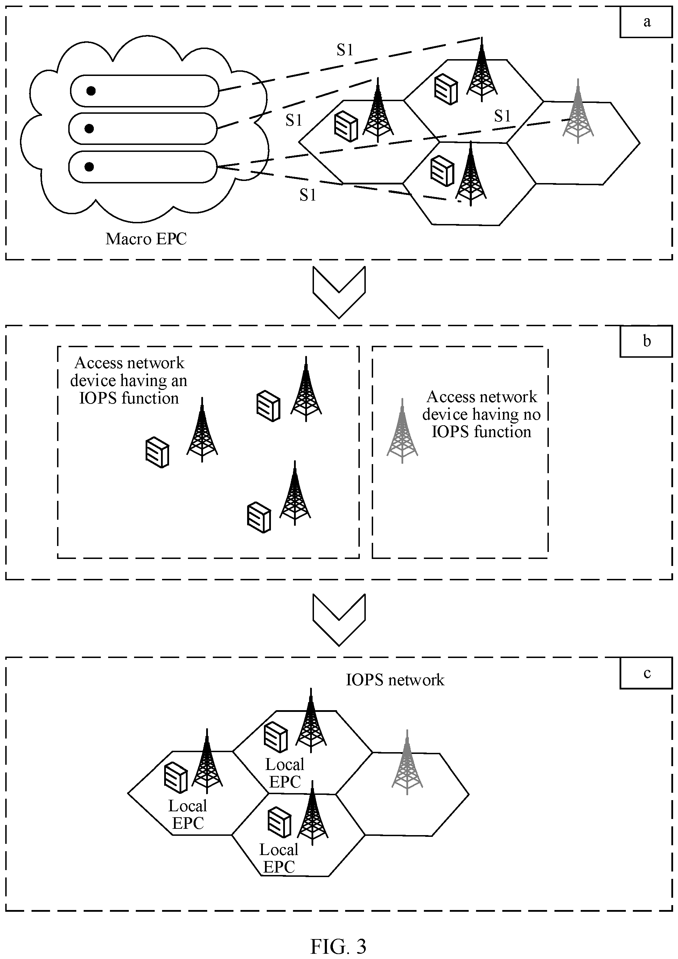

In a scenario shown in FIG. 3, when an S1 link between an access network device and a core network element in a macro network (for example, a macro EPC) normally performs communication, the access network device can access the macro EPC, and provide a communication service for a terminal device, as shown in a in FIG. 3. When a link between an access network device and a core network device in a macro network (for example, a macro EPC) is interrupted, for an access network device with a specific IOPS function, the access network device can access an IOPS network, and provide a mission critical service (mission critical service, MCX) for a terminal device, as shown in b and c in FIG. 3. The MCX includes one or more of the following: mission-critical push-to-talk (mission-critical push-to-talk, MCPTT), a mission-critical video service (mission-critical video service, MCVideo), or a mission-critical data service (mission-critical data service, MCData). The MCPTT is a voice communication service, including an individual voice call and a group voice call, that features low connection establishment and transmission delay, and high availability, reliability, and security, and that can be preferentially processed and preempted. The MCVideo is a video communication service, for example, a video call, that features low connection establishment and transmission delay, and high availability, reliability, and security, and that can be preferentially processed and preempted. The MCData is a data communication service, for example, instant messaging and file transfer, that features low connection establishment and transmission delay, and high availability, reliability, and security, and that can be preferentially processed and preempted.

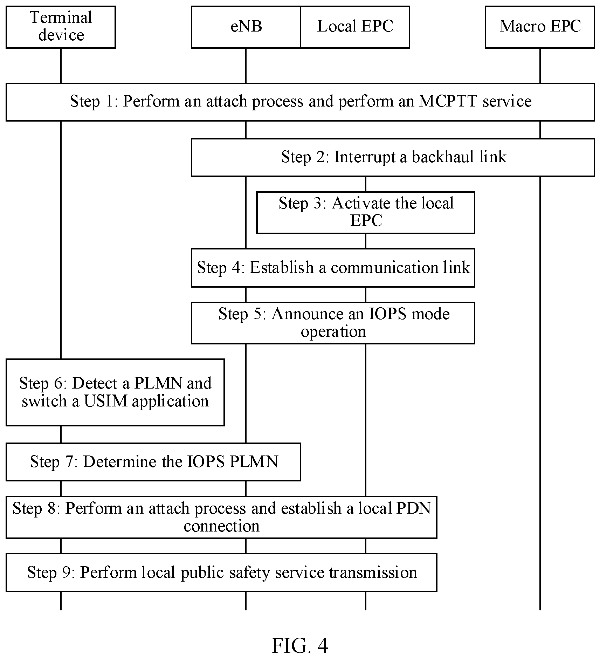

As shown in FIG. 4, in a process in which a terminal device is handed over from a macro network to an IOPS network, steps between devices are included.

Step 1: Perform an attach process between a terminal device, an eNB, and a macro EPC, so that the terminal device is attached to the macro EPC; and perform an MCPTT service between the terminal device, the eNB, and the macro EPC.

Step 2: The eNB determines that a backhaul link between the eNB and the macro EPC is interrupted (eNB detects loss of backhaul).

The backhaul link between the eNB and the macro EPC includes an S1 link in FIG. 3.

Step 3: The eNB starts a local EPC, to be specific, the local EPC is activated (local EPC activated), where the local EPC may include one or more MMEs, SGWs, PGWs, and the like.

Step 4: The eNB establishes a communication link to the local EPC (establish S1 link to local EPC).

Step 5: The eNB announces an IOPS mode operation (announce IOPS mode operation).

For example, after entering the IOPS mode operation, the eNB broadcasts a public land mobile network (public land mobile network, PLMN) identifier (identifier, ID) corresponding to an IOPS network.

Step 6: The terminal device detects a PLMN of the IOPS network and switches a USIM application of the terminal device (detects IOPS PLMN and USIM application is switched).

Step 7: The terminal device determines the PLMN of the IOPS network (selects IOPS PLMN).

Step 8: Perform an attach process between the terminal device, the eNB, and a local EPC, so that the terminal device is attached to the local EPC, and establishes a local PDN connection (attached to local EPC and request local PDN connection).

Step 9: Perform local public safety service transmission (access local public safety services) between the terminal device, the eNB, and the local EPC.

It should be understood that the attach process includes an access authentication process between the terminal device and the local EPC. In a 4G network, the access authentication process may also be referred to as an authentication and key agreement (authentication and key agreement, AKA) process. The AKA process is performed between the terminal device and a local home subscriber server (local home subscriber server, L-HSS). To ensure coverage and disaster tolerance of the IOPS network, an operator of the IOPS network deploys a plurality of IOPS networks. PLMN IDs of these IOPS networks are the same as a stored user key. However, for the plurality of IOPS networks sharing the same PLMN ID, an L-HSS is deployed in each of the IOPS networks, and each L-HSS stores user data and root key information used in an AKA process (AKA root key), for example, a root key K. A physical deployment location of the L-HSS is lower compared with a physical deployment location of the macro EPC. To be specific, the L-HSS is not located in a core network equipment room of the operator but is located near a base station equipment room, where security measures are not as good as those in the core network equipment room. Consequently, there is a higher risk of the L-HSS being attacked. If one of a plurality of L-HSSs is attacked, information stored in the L-HSS is leaked. Because all of the plurality of L-HSSs store a same AKA root key, other L-HSSs are affected even if the AKA root key is leaked due to an attack on a single L-HSS. An attacker can access the IOPS network based on the AKA root key at will. The terminal device and the L-HSS store the same root key K, and an AKA procedure between the terminal device and the L-HSS is performed based on the root key K. Correspondingly, the terminal device and the L-HSS use the same key in the AKA process. Therefore, the root key K is a symmetric key.

### 2. Key separation mechanism for symmetric keys

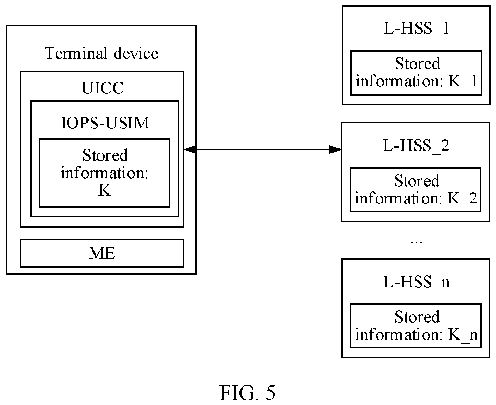

In a 4G system, a key separation mechanism for symmetric keys is introduced. As shown in FIG. 5, a terminal device includes a universal integrated circuit card (universal integrated circuit card, UICC) and mobile equipment (mobile equipment, ME). The UICC is a hardware carrier of a universal subscriber identity module (universal subscriber identity module, USIM) application, and the UICC and the USIM application are provided by a UICC card supplier. Information stored in the USIM application is provided by an operator. The ME is hardware, for example, a mobile phone, of the terminal device. It is assumed that there are n L-HSSs numbered from 1 to n. The L-HSSs are configured with different keys numbered from K_1 to K_n. The keys K_1 to K_n are derived based on the root key K. The root key K for deriving K_1 to K_n is the same as K stored in the USIM application of the terminal device, that is, the root key K and K are mutually symmetric keys.

In the AKA procedure, the terminal device receives authentication information from an L-HSS (for example, L-HSS_2). The authentication information includes an authentication management field (authentication management field, AMF). The authentication management field is used to indicate a specific L-HSS with which the USIM application of the terminal device performs an AKA procedure and how to perform derivation operation based on the root key K. The USIM application of the terminal device performs, through derivation operation indicated by the authentication management field, operation on the root key K stored in the USIM application, to obtain K_2. The USIM application of the terminal device performs an AKA procedure with L-HSS_2 based on the key K_2.

### 3. Subscription permanent identifier (subscription permanent identifier, SUPI) and subscription concealed identifier (subscription concealed identifier, SUCI)

The SUPI is a user identifier of a terminal device in a 5G network. The SUPI may include an international mobile subscriber identity (international mobile subscriber identity, IMSI). It is considered that user privacy leakage is easily caused because the SUPI is exposed in an air interface. Therefore, SUPI protection processing is introduced in the 5G network. To be specific, the terminal device encrypts a part or all of content of the SUPI to obtain the SUCI, so that the SUPI is not exposed in the air interface, thereby ensuring privacy of the SUPI.

Asymmetric encryption needs to be used in a processing process of the SUPI. To be specific, the terminal device encrypts the part (or all) of the content of the SUPI by using a public key, to obtain the SUCI; and a UDM network element decrypts a part (or all) of content of the SUCI by using a private key, to obtain the SUPI. The terminal device needs to store the public key, and the UDM network element needs to store the private key.

It should be further noted that the terminal device encrypts a part (or all) of the content of the SUPI by using the public key, to obtain the SUCI includes: The terminal device encrypts the part (or all) of the content of the SUPI by using the public key, to obtain encrypted ciphertext information, and the terminal device determines the SUCI by using the ciphertext information. A part (or all) of information in the SUCI is the ciphertext. That the UDM network element decrypts a part (or all) of the content of the SUCI by using the private key, to obtain the SUPI includes: The UDM network element decrypts the part (or all) of the content of the SUCI by using the private key, to obtain a decrypted plaintext, and the UDM determines the SUPI by using the plaintext information. A part (or all) of information in the SUPI is the plaintext. In this embodiment of this application, an encrypted part of information in the SUPI includes at least user identity information. In other words, the terminal device protects at least the user identity information in the SUPI by using the public key. The user identity information is a mobile subscriber identification number (mobile subscriber identification number, MSIN) in the SUPI in an IMSI format, or the user identity information is a user name (user name) in the SUPI in a network access identifier (network access identifier, NAI) format.

The industry is discussing how to combine an IOPS scenario with a 5G network. Some technologies in an IOPS scenario in an LTE network may also be reused in the 5G network.

However, for the plurality of IOPS networks sharing the same PLMN ID, a same pair of asymmetric keys is used to protect user identity information. A UDM network element is deployed on each of the IOPS networks. For the IOPS networks sharing the same PLMN ID, UDM network elements in different IOPS networks store a same asymmetric key, that is, a private key used to decrypt a part or all of content of the SUCI. If a UDM network element in a specific IOPS network is attacked, a private key is leaked. Even if the terminal device initiates a registration request to a UDM network element that is not attacked, an attacker may obtain the SUPI based on the private key. Consequently, user identity information cannot be protected. Therefore, when the terminal device accesses an IOPS network, how to perform security protection on user identity information is an urgent problem to be resolved.

In conclusion, for the foregoing technical problems, embodiments of this application provide the following technical solutions, to perform security protection on user identity information and reduce a possibility of leakage of the user identity information. The "user identity information" in embodiments of this application may be any information used to identify a user identity, for example, may be a SUPI or a part of the SUPI in a 5G scenario, or may be information used to identify a user identity in a subsequent evolved system. This is not limited in this application. The following describes the technical solutions of this application with reference to the accompanying drawings.

The technical solutions in embodiments of this application may be applied to various communication systems, as shown in FIG. 1a or FIG. 1b.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" or "for example" are used to represent giving an example, an illustration, or a description. Any embodiment or design scheme described as "example" in this application should not be explained as being more preferred or having more advantages than another embodiment or design scheme. Exactly, the term "example" is used to present a concept in a specific manner.

In embodiments of this application, "information (information)", "signal (signal)", "message (message)", "channel (channel)", and "signaling (signaling)" may be interchangeably used sometimes. It should be noted that meanings expressed by the terms are matchable when differences of the terms are not emphasized. The terms "of (of)", "corresponding relevant (corresponding, relevant)", and "corresponding (corresponding)" may sometimes be interchangeably used. It should be noted that meanings expressed by the terms are matchable when differences of the terms are not emphasized. In addition, "/" mentioned in this application may indicate an "or" relationship.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

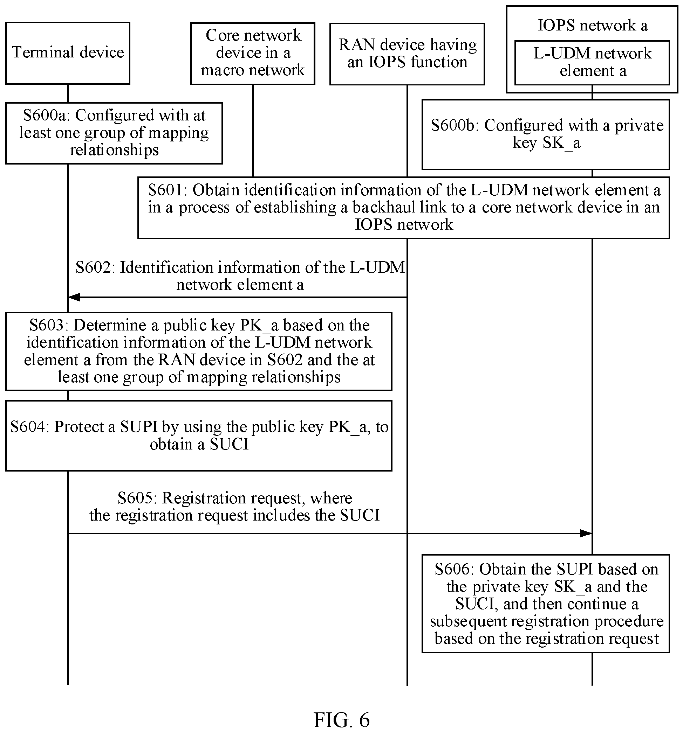

For ease of understanding, the following specifically describes an interaction procedure between devices by using method embodiments with reference to FIG. 6 to FIG. 13. In embodiments of this application, the RAN device is a device having an IOPS function, that is, has a capability of accessing an IOPS network. For brevity of description, the RAN device is still used for description. An L-UDM network element is the UDM network element in the IOPS network. An IOPS core network or the IOPS network may be further used to refer to another local core network or local network, for example, an IOPS 5GC or a private network. This is uniformly described herein, and details are not described below again.

For example, FIG. 6 is a schematic flowchart 1 of a key management method according to an embodiment of this application. The key management method is applicable to a process in which a terminal device accesses an IOPS network. As shown in FIG. 6, a procedure of the key management method is as follows:
S600a: At least one group of mapping relationships is configured for a terminal device.

Each of the at least one group of mapping relationships is used to indicate a correspondence between identification information of a local unified data management (local unified data management, L-UDM) network element and one piece of public key information. In this embodiment of this application, there is a one-to-one correspondence between the identification information of the L-UDM network element and the public key information. It should be understood that in this embodiment of this application, the L-UDM is a UDM network element in an IOPS network.

For example, n groups of mapping relationships are used as an example, and each group of correspondences is shown in Table 1.

**Table 1**

| Mapping relationship | Identification information of the L-UDM network element | Public key information |
|---|---|---|
| Correspondence 1 | L-UDM_1 ID | PK_1 |
| ... | ... | ... |
| Correspondence n | L-UDM_n ID | PK_n |

In Table 1, the correspondence 1 indicates a correspondence between the L-UDM_1 ID and the PK_1. The correspondence n indicates a correspondence between the L-UDM_n ID and the PK_n. The L-UDM_1 ID identifies the L-UDM network element 1, and the L-UDM_n ID identifies the L-UDM network element n.

For example, the terminal device includes ME and a USIM, as shown in FIG. 5. At least one group of mapping relationships is configured for the USIM of the terminal device. For example, a UICC card supplier writes the mapping relationships in S600a into the USIM, or a mobile network operator writes the mapping relationships in S600a into the USIM.

It should be noted that in this embodiment of this application, the identification information of the L-UDM network element is described in two possible cases.

In a possible case, identification information of each L-UDM network element is still a unique identifier in an entire network when an identifier of an IOPS network in which the network element is located does not need to be referred to. For example, the identification information of the L-UDM network element may be identification information of an L-UDM network element instance (instance). The identification information of the network element instance may be a network element instance ID. The identification information of the L-UDM network element may alternatively be identification information of the IOPS network in which the L-UDM network element is located. The identifier information of the IOPS network may be a PLMN ID and/or network identifier (network identifier, NID) information. An L-UDM ID may uniquely identify one L-UDM network element. In this case, when IOPS networks share a same PLMN ID, the L-UDM ID may include the NID information. The PLMN ID and the NID may uniquely identify an IOPS network in which a specific L-UDM network element is located, and further determine the L-UDM network element in the IOPS network. For example, the L-UDM_1 ID includes NID_1, and the L-UDM_n ID includes NID_n. Alternatively, the L-UDM ID may uniquely identify one IOPS network. In this case, different IOPS networks use different PLMN IDs. The L-UDM ID may include a PLMN ID corresponding to an IOPS network in which the L-UDM is located. In this case, the PLMN ID may uniquely identify an IOPS network in which a specific L-UDM network element is located, and further determine the L-UDM network element in the IOPS network.

In the other possible case, identification information of each L-UDM network element needs to be determined with reference to an identifier of an IOPS network in which the network element is located. In this case, identification information of an L-UDM network element includes a PLMN ID and a first identifier. The first identifier may be a specific number from 1 to n, where n indicates a quantity of L-UDM network elements in a PLMN identified by the PLMN ID.

S600b: A private key SK_a is configured for an L-UDM network element a.

The private key SK_a is used to decrypt a part or all of content of a SUCI.

The L-UDM network element a is one of the L-UDM network element 1 to the L-UDM network element n. Correspondingly, an identifier of the L-UDM network element a is denoted as an L-UDM_a ID. The private key SK_a and the public key PK_a in step S600a are mutually asymmetric keys. The public key PK_a is used to protect a SUPI of the terminal device, the public key PK_a is used to obtain the SUCI based on the SUPI, and the private key SK_a is used to obtain the SUPI based on the SUCI.

It should be noted that, in this embodiment of this application, protecting the SUPI of the terminal device by using the public key PK_a, to obtain the SUCI includes: encrypting a part (or all) of content of the SUPI by using the public key PK_a, to obtain an encrypted ciphertext, and determining the SUCI based on the ciphertext obtained after the encryption. The encrypted ciphertext may include a part (or all) of content of the SUCI. Obtaining the SUPI based on the SUCI by using the private key SK_a includes: decrypting the part (or all) of the content of the SUCI by using the private key SK_a, to obtain a decrypted plaintext, and determining the SUPI based on the decrypted plaintext. The decrypted plaintext may include the part (or all) of the content of the SUPI.

It should be understood that when the L-UDM network element a is the L-UDM network element 1 in Table 1, the L-UDM_a ID is the L-UDM_1 ID, and the private key SK_a is SK_1. The private key SK_1 and the public key PK_1 are mutually asymmetric keys. When the L-UDM network element a is the L-UDM network element n in Table 1, the L-UDM_a ID is the L-UDM_n ID, and the private key SK_a is SK_n. The private key SK_n and the public key PK_n are mutually asymmetric keys.

For example, an IOPS network operator writes a private key into the L-UDM network element, as shown in Table 2.

**Table 2**

| Identification information of the L-UDM network element | Private key information |
|---|---|
| L-UDM_1 ID | SK_1 |
| ... | ... |
| L-UDM_n ID | SK_n |

In Table 2, the IOPS network operator writes the private key SK_1 into the L-UDM network element 1, and the IOPS network operator writes the private key SK_n into the L-UDM network element n. It should be understood that, in S600b, the L-UDM network element a is used as an example to describe a process of configuring the private key information.

A RAN device (having an IOPS function) performs S601 at a specific moment.

S601: The RAN device obtains identification information of the L-UDM network element a in a process of establishing a backhaul link between the RAN device and a core network device in an IOPS network.

The backhaul link in S601 is a communication link between the RAN device and the core network device in the IOPS network.

For example, an implementation process of S601 is described as follows.

In a possible implementation, the backhaul link includes an internet protocol security (internet protocol security, IPsec) link. In a process of establishing the IPsec link between the RAN device and the core network device in the IOPS network, the RAN device exchanges an internet key exchange protocol security association initial (internet key exchange protocol security association initial, IKE_SA_INIT) message and an internet key exchange protocol authentication (internet key exchange protocol authentication, IKE_AUTH) message with the core network device in the IOPS network. The core network device in the IOPS network includes the identification information of the L-UDM network element a in the IKE_SA_INIT message or the IKE_AUTH message. In this way, the RAN device obtains the identification information of the L-UDM network element a from the IKE_SA_INIT message or the IKE_AUTH message.

In another possible implementation, the backhaul link includes a datagram transport layer security (datagram transport layer security, DTLS) link. In a process of establishing the DTLS link between the RAN device and the core network device in the IOPS network, the RAN device exchanges handshake messages, such as ClientHello, ServerHello, ChangeCipherSpec, and Finished, with the core network device in the IOPS network. The core network device in the IOPS network includes the identification information of the L-UDM network element a in the ClientHello, the ServerHello, the ChangeCipherSpec, or the Finished. In this way, the RAN device obtains the identification information of the L-UDM network element a from the ClientHello, the ServerHello, the ChangeCipherSpec, or the Finished.

In this embodiment of this application, a process in which the RAN device learns of the identification information of the L-UDM network element a is not limited.

For example, a trigger condition of S601 may include: The RAN device establishes a backhaul link to the core network device in the IOPS network when a connection between the RAN device and a core network device in the macro network (Macro CN) is broken, to continue to provide a communication service for the terminal device. Certainly, the RAN device may also establish the backhaul link to the core network device in the IOPS network when the connection between the RAN device and the core network device in the macro network is normal. This is not limited in this embodiment of this application. It should be understood that, the RAN device establishes the backhaul link to the core network device in the IOPS network, and the RAN device determines identification information of an L-UDM network element in a started IOPS network, where the identification information is denoted as an L-UDM_a ID. For example, the RAN device obtains the L-UDM_a ID when establishing the backhaul link between the RAN device and the IOPS network.

S602: The RAN device broadcasts the identification information of the L-UDM network element a.

For example, in a possible example, S602 includes: The RAN device broadcasts an identifier of an IOPS network a and the identification information of the L-UDM network element a. In this case, the L-UDM network element a is a network element in the IOPS network a. The identifier of the IOPS network a may be a PLMN ID used by the IOPS network a. In other words, the broadcast message carries the identifier of the IOPS network a and the identification information of the L-UDM network element a.

In another possible example, when the identification information of the L-UDM network element includes the identifier of the IOPS network and a first identifier, the RAN device in S602 broadcasts the identification information of the L-UDM network element a. In other words, the broadcast message carries the identification information of the L-UDM network element a.

It should be understood that, if the L-UDM_a ID may uniquely identify one IOPS network, the L-UDM_a ID may include the PLMN ID; if the L-UDM_a ID is the PLMN ID of the IOPS network, the PLMN ID of the IOPS network needs to be broadcast in S602, and PLMN information of the IOPS network and information about the L-UDM network element a do not need to be simultaneously broadcast.

A terminal device within coverage of the broadcast message in S602 receives the broadcast message from the RAN device. When the identification information of the L-UDM network element is a unique identifier in an entire network, the terminal device receives the identification information of the L-UDM network element a from the RAN device by using the broadcast message. When the identification information of the L-UDM network element includes the identifier of the IOPS network a and the first identifier, the terminal device receives the identifier of the IOPS network a and the first identifier from the RAN device by using the broadcast message, and then determines the identification information of the L-UDM network element a based on the identifier of the IOPS network a and the first identifier.

When the terminal device receives the identifier of the IOPS network a from the RAN device, the terminal device determines, in response to the identifier of the IOPS network a, that the terminal device needs to access the IOPS network a. Alternatively, when a preset condition is met, the terminal device determines, in response to the identifier of the IOPS network a, that the terminal device needs to access the IOPS network a. The preset condition includes at least one of the following:
Preset condition a: First information is preconfigured for the terminal device. The first information indicates the terminal device to access the IOPS network after receiving the identifier of the IOPS network. The first information may be information preconfigured by an operator for the terminal device. In this case, after receiving the identifier of the IOPS network a, the terminal device may determine, based on the preconfigured first information, that the terminal device needs to access the IOPS network a.
Preset condition b: The terminal device finds no second network. The second network is another network other than the IOPS network a. In this case, the terminal device determines, if finding no PLMN ID of another accessible network other than the IOPS network a, that the terminal device needs to access the IOPS network a.

It should be understood that the preset condition a and the preset condition b are used as an example for description, and a specific manner of determining, by the terminal device, that the terminal device needs to access the IOPS network a is not limited in this embodiment of this application. After the terminal device determines that the terminal device needs to access the IOPS network a, the terminal device performs the following steps.

S603: The terminal device determines the public key PK_a based on the identification information of the L-UDM network element a from the RAN device in S602 and the at least one group of mapping relationships.

For example, Table 1 is used as an example. The public key PK_a is the public key PK_1 when the L-UDM_a ID is the L-UDM_1 ID in Table 1. The public key PK_a is the public key PK_n when the L-UDM_a ID is the L-UDM_n ID in Table 1.

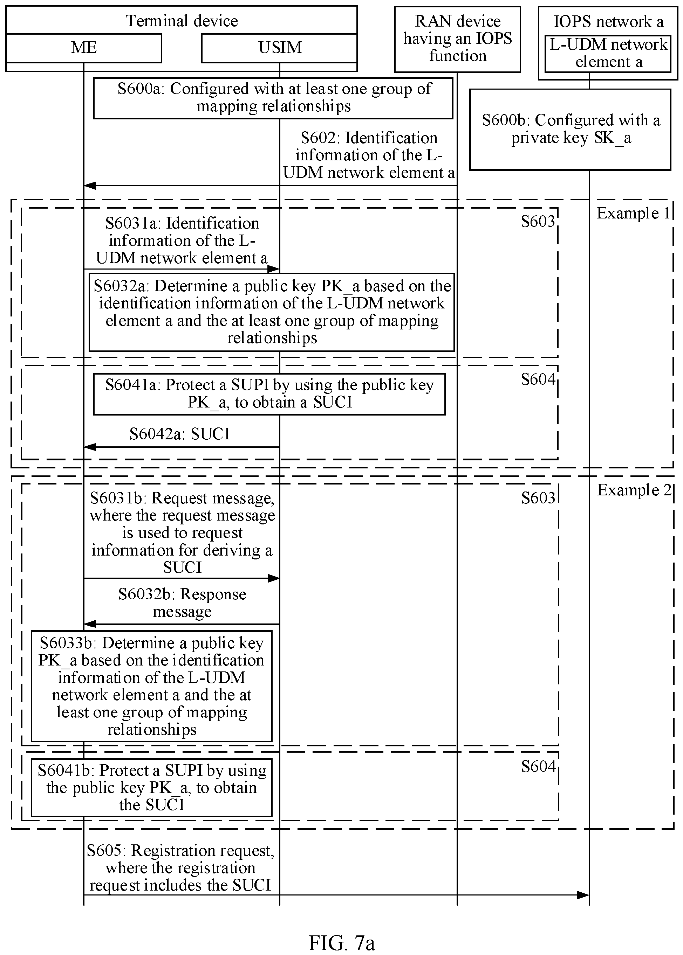

In some embodiments, the terminal device includes ME and a USIM. As shown in FIG. 7a, in S602, the ME receives the broadcast message from the RAN device, and then the ME determines, based on the identifier of the IOPS network, that the IOPS network needs to be accessed. The ME determines that the SUCI is generated by the USIM, or the ME determines that the SUCI is generated by the ME. It should be noted that, before performing S602, the ME may determine that the SUCI is generated by the USIM or the ME. The following describes S603 by using Example 1 and Example 2.

Example 1: When the SUCI is generated by the USIM, as shown in FIG. 7a, S603 includes S6031a and S6032a.

S6031a: The ME sends the identification information of the L-UDM network element a to the USIM. Correspondingly, the USIM receives the identification information of the L-UDM network element a from the ME.

For example, the ME sends the identification information of the L-UDM network element a to the USIM by using a get identity command (GET IDENTITY command). A data (Data) field in the get identity command carries the L-UDM_a ID.

S6032a: The USIM determines the public key PK_a based on the identification information of the L-UDM network element a and at least one group of mapping relationships.

At least one group of mapping relationships is preconfigured in the USIM. For details, refer to the description of S600a. Details are not described herein again.

Example 2: When the SUCI is generated by the ME, as shown in FIG. 7a, S603 includes S6031b, S6032b, and S6033b.

S6031b: The ME sends a request message to the USIM. Correspondingly, the USIM receives the request message from the ME.

The request message is used to request information for deriving the SUCI.

For example, the ME sends a read command to the USIM, to request to read information in an EF_{SUCI_Cale_Info} file. For the EF_{SUCI_Cale_Info} file, refer to a related protocol specification of the 3rd generation partnership project (3rd generation partnership project, 3GPP). Details are not described herein again.

S6032b: The USIM sends a response (response) message to the ME. Correspondingly, the ME receives the response message from the USIM.

The response message includes the information for deriving the SUCI, for example, at least one group of mapping relationships, a SUPI, a SUPI type, and protection schemes 1 to n. The SUPI type is used to form a SUCI, and indicates a type of a SUPI based on which the SUCI is generated, for example, a SUPI in an IMSI format or a SUPI in an NAI format. For details, refer to a related protocol specification of the 3GPP. The protection scheme is an algorithm parameter, including a key length, a parameter of an elliptic curve integrate encrypt scheme (elliptic curve integrate encrypt scheme, ECIES) algorithm, and the like, used to generate the SUCI. For details, refer to a related protocol specification of the 3GPP. A protection scheme a in the protection schemes 1 to n corresponds to the information about the L-UDM network element a and the public key PK_a in S600a.

The at least one group of mapping relationships in the response message is consistent with the mapping relationships in S600a. Details are not described herein again.

S6033b: The ME determines the public key PK_a based on the identification information of the L-UDM network element a and the at least one group of mapping relationships.

The mapping relationships in S6033b are consistent with the mapping relationships in S6032b. Details are not described herein again.

The terminal device performs S604 after determining the public key PK_a.

S604: The terminal device protects the SUPI by using the public key PK_a, to obtain the SUCI.

For example, that the terminal device protects the SUPI by using the public key PK_a, to obtain the SUCI includes: The terminal device encrypts a part (or all) of content of the SUPI by using the public key PK_a, to obtain an encrypted ciphertext, and determines the SUCI based on the ciphertext obtained after the encryption. The encrypted ciphertext may include a part (or all) of content of the SUCI. An encrypted part of content in the SUPI includes at least user identity information. Specifically, the terminal device protects at least the user identity information in the SUPI by using the public key PK_a. For the user identity information, refer to descriptions of the SUPI and the SUCI in the term explanation part. Details are not described herein again.

In some embodiments, the terminal device includes ME and a USIM, as shown in FIG. 5. In this case, the SUCI may be generated by the USIM or may be generated by the ME. The following describes S604 by using Example 1 and Example 2.

Example 1: When the SUCI is generated by the USIM, as shown in FIG. 7a, S604 includes S6041a and S6042a.

S6041a: The USIM protects the SUPI by using the public key PK_a, to obtain the SUCI.

For an implementation process of S6041a, refer to the example description in S604. Details are not described herein again.

S6042a: The USIM sends the SUCI to the ME. Correspondingly, the ME receives the SUCI from the USIM.

The SUCI in S6042a is consistent with the SUCI in S6041a. Details are not described herein again.

For example, the USIM sends the SUCI to the ME by using a get identity response (GET IDENTITY response).

Example 2: When the SUCI is generated by the ME, as shown in FIG. 7a, S604 includes S6041b.

S6041b: The ME protects the SUPI by using the public key PK_a, to obtain the SUCI.

For an implementation process of S6041b, refer to the example description in S604. Details are not described herein again.

The terminal device performs S605 after determining the SUCI.

S605: The terminal device sends a registration request to the IOPS network a. Correspondingly, the IOPS network a receives the registration request from the terminal device.

It should be understood that, in S605, the terminal device sends the registration request to an AMF network element in the IOPS network a. Correspondingly, the AMF network element in the IOPS network a receives the registration request from the terminal device. In the IOPS network a, the AMF network element sends the SUCI in the registration request to the L-UDM network element a. Correspondingly, the L-UDM network element a in the IOPS network a receives the SUCI.

The L-UDM network element a performs S606 after receiving the SUCI.

S606: The L-UDM network element a obtains the SUPI based on the private key SK_a and the SUCI, and then continues a subsequent registration procedure based on the registration request. For a specific registration procedure, refer to a related protocol specification of the 3GPP.

That the L-UDM network element a obtains the SUPI based on the private key SK_a and the SUCI includes: decrypting a part (or all) of content of the SUCI by using the private key SK_a, to obtain a decrypted plaintext, and determining the SUPI based on the decrypted plaintext. The decrypted plaintext may include the part (or all) of the content of the SUPI.

The private key SK_a in S606 is consistent with the private key SK_a in S600b. Details are not described herein again.

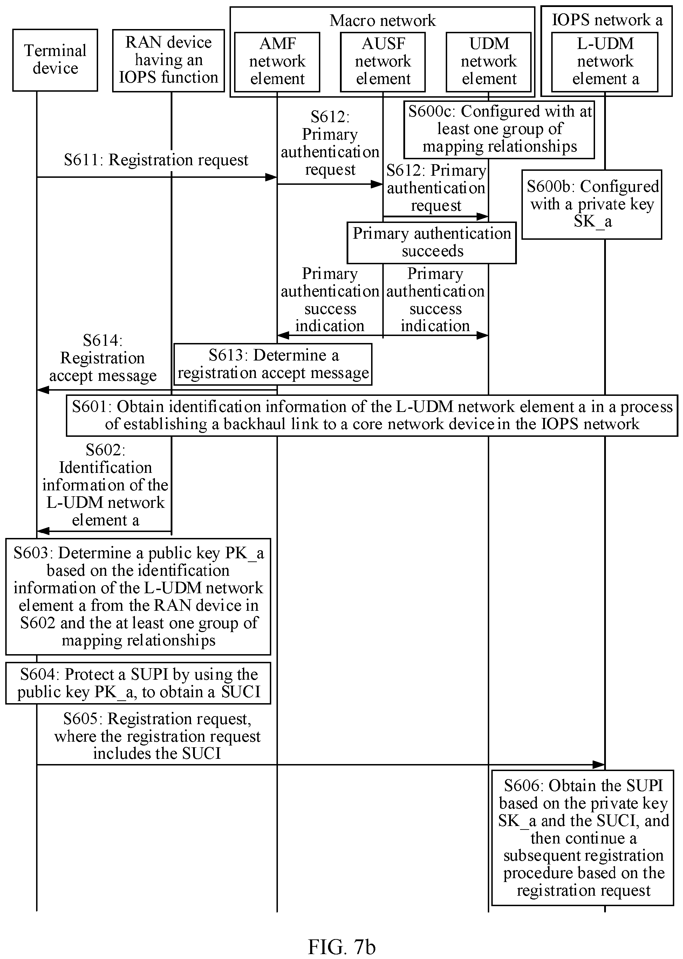

It should be understood that in FIG. 6 and FIG. 7a, an example in which the mapping relationships are preconfigured for the terminal device is used for description. Certainly, the mapping relationships may alternatively be obtained in a process in which the terminal device registers to a macro network. As shown in FIG. 7b, S600a is not performed, and S600c and S611 to S614 are performed instead. For S600b and S601 to S606, refer to the description of FIG. 6. Details are not described herein again. S600c and S611 to S614 are described as follows:
S600c: At least one group of mapping relationships is configured for a UDM network element in the macro network.
   For the mapping relationships, refer to the description of S600a. Details are not described herein again.
S611: The terminal device sends a registration request to an AMF network element in the macro network. Correspondingly, the AMF network element in the macro network receives the registration request from the terminal device.

In some embodiments, the registration request further includes capability information. The capability information indicates that the terminal device has a capability of accessing the IOPS network.

The AMF network element in the macro network determines, based on the registration request in S611, that primary authentication needs to be performed and triggers a primary authentication procedure. The AMF network element in the macro network performs S612.

S612: The AMF network element in the macro network sends a primary authentication request to the UDM network element in the macro network through an AUSF network element in the macro network. Correspondingly, the UDM network element in the macro network receives the primary authentication request from the AMF network element in the macro network through the AUSF network element in the macro network.

In other words, the AMF network element in the macro network sends the primary authentication request to the AUSF network element in the macro network, and the AUSF network element in the macro network further sends the primary authentication request to the UDM network element in the macro network.

After the primary authentication succeeds, the AUSF network element in the macro network separately sends a primary authentication success indication to the UDM network element in the macro network and the AMF network element in the macro network.

The AMF network element in the macro network performs S613 after receiving the primary authentication success indication.

S613: The AMF network element in the macro network continues a subsequent registration procedure, and the AMF network element in the macro network determines a registration accept message after the subsequent registration procedure is successfully performed.

For the registration procedure, refer to a current related technical specification of the 3GPP. Details are not described herein again.

The registration accept message includes at least one group of mapping relationships. For the mapping relationships, refer to the description of S600c. Details are not described herein again.

S614: The AMF network element in the macro network sends the registration accept message to the terminal device. Correspondingly, the terminal device receives the registration accept message from the AMF network element in the macro network.

The registration accept includes the at least one group of mapping relationships. For the mapping relationships, refer to the description of S600c. Details are not described herein again.

In this way, the terminal device may obtain the mapping relationships in a process of registering to the macro network.

Optionally, the AMF network element may not include the mapping relationships in the registration accept message, but include the at least one group of mapping relationships in a UE configuration update command (UE configuration update command) message in a UE configuration update (UE configuration update) procedure. Specifically, the AMF network element in the macro network sends the UE configuration update command message to the terminal device, where the UE configuration update command message includes the at least one group of mapping relationships. For the mapping relationships, refer to the description of S600c. Details are not described herein again. Correspondingly, the terminal device receives the UE configuration update command message, and obtains the at least one group of mapping relationships.

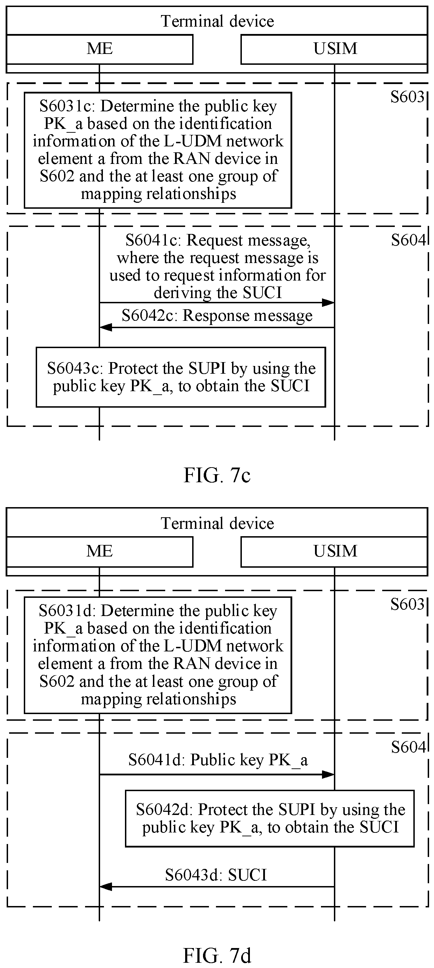

It should be noted that, in some embodiments, the terminal device includes ME and a USIM. In this case, in a possible implementation, detailed steps of S603 and S604 are shown in FIG. 7c.

S603: The terminal device determines the public key PK_a based on the identification information of the L-UDM network element a from the RAN device in S602 and the at least one group of mapping relationships.

For example, S603 includes S6031c.

S6031c: The ME determines the public key PK_a based on the identification information of the L-UDM network element a from the RAN device in S602 and the at least one group of mapping relationships.

For an implementation process of S6031c, refer to the description of S6032a. Details are not described herein again.

S604: The terminal device protects the SUPI by using the public key PK_a, to obtain the SUCI.

For example, S604 includes S6041c, S6042c, and S6043c.

S6041c: The ME sends a request message to the USIM. Correspondingly, the USIM receives the request message from the ME.

The request message is used to request information for deriving the SUCI.

For example, the ME sends a read command to the USIM, to request to read information in an EF_{SUCI_Cale_Info} file. For the EF_{SUCI_Cale_Info} file, refer to a related protocol specification of the 3GPP. Details are not described herein again.

S6042c: The USIM sends a response (response) message to the ME. Correspondingly, the ME receives the response message from the USIM.

The response message includes the information for deriving the SUCI, such as a SUPI, a SUPI type, and protection schemes 1 to n. For details, refer to the description of S6032b. Details are not described herein again.

S6043c: The ME protects the SUPI by using the public key PK_a, to obtain the SUCI.

For an implementation process of S6043c, refer to the example description in S604. Details are not described herein again.

In other words, the ME generates the SUCI by using the public key PK_a.

In some embodiments, the terminal device includes ME and a USIM. In this case, in another possible implementation, detailed steps of S603 and S604 are shown in FIG. 7d.

S603: The terminal device determines the public key PK_a based on the identification information of the L-UDM network element a from the RAN device in S602 and the at least one group of mapping relationships.

For example, S603 includes S6031d.

S6031d: The ME determines the public key PK_a based on the identification information of the L-UDM network element a from the RAN device in S602 and the at least one group of mapping relationships.

For an implementation process of S6031d, refer to the description of S6032a. Details are not described herein again.

S604: The terminal device protects the SUPI by using the public key PK_a, to obtain the SUCI.

For example, S604 includes S6041d, S6042d, and S6043d.

S6041d: The ME sends the public key PK_a to the USIM. Correspondingly, the USIM receives the public key PK_a from the ME.

S6042d: The USIM protects the SUPI by using the public key PK_a, to obtain the SUCI.

S6043d: The USIM sends the SUCI to the ME. Correspondingly, the ME receives the SUCI from the USIM.

In other words, the USIM generates the SUCI by using the public key PK_a.

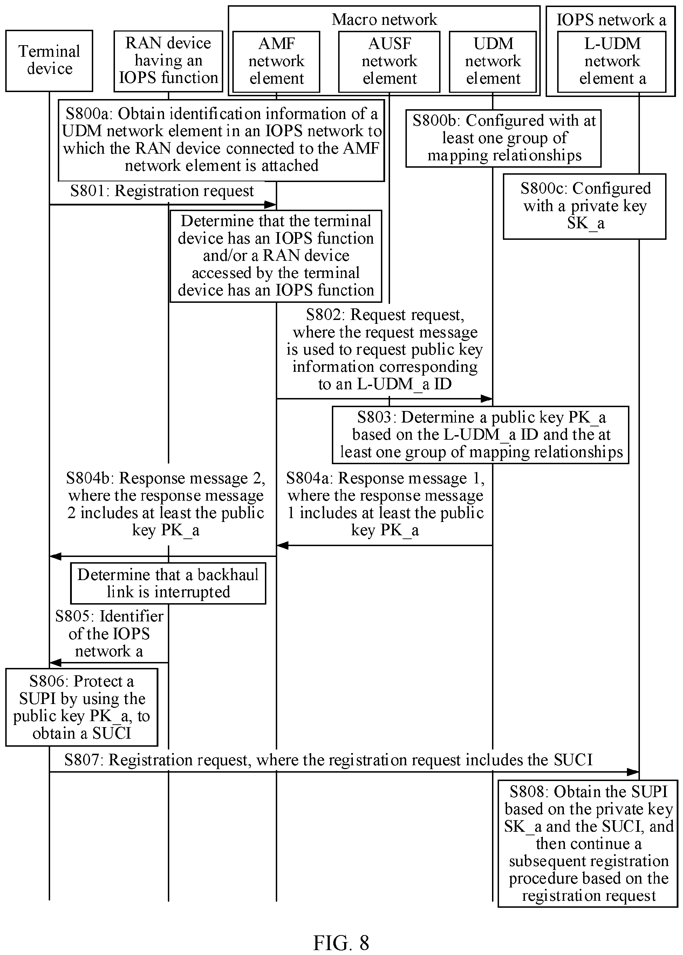

For example, FIG. 8 is a schematic flowchart 2 of a key management method according to an embodiment of this application. The key management method is applicable to a process in which a terminal device accesses an IOPS network. As shown in FIG. 8, a procedure of the key management method is as follows:
S800a: An AMF network element in a macro network obtains identification information of a UDM network element in an IOPS network to which a RAN device connected to the AMF network element is attached.

The IOPS network to which the RAN device is attached is specifically an IOPS network deployed by an operator near the RAN device. An IOPS network device deployed in the IOPS network may be connected to the RAN device after the device is powered on. The RAN device determines, based on preconfigured information of the operator, information about a nearby IOPS network that can be connected to the RAN device and information about a UDM network element in the IOPS network. Therefore, the IOPS network to which the RAN device in the macro network is attached may also be referred to as an IOPS network to which the RAN device may be connected.

It should be additionally noted that all or some RAN devices connected to the AMF network element in the macro network have IOPS networks to which the RAN devices are attached. If all the RAN devices connected to the AMF network element do not have IOPS networks to which the RAN devices are attached, the AMF network element cannot obtain identification information of a UDM network element in an IOPS network to which the RAN device is attached. In other words, the RAN device does not have an IOPS function.

For example, n L-UDM network elements are used as an example, and information about the n L-UDM network elements is respectively denoted as an L-UDM_1 ID, L-UDM_2 ID, ..., and an L-UDM_n ID. The n L-UDM network elements are UDM network elements in IOPS networks to which RAN devices connected to the AMF network element are attached.

For example, the AMF network element in the macro network obtains an IOPS network to which a RAN device connected to the AMF network element is attached and information about a UDM network element corresponding to the IOPS network. In S800a, the information may be obtained when a connection between the AMF network element and the RAN device is established after the AMF network element and the RAN device are powered on, or the AMF network element may be configured by a network manager. This is not limited in this embodiment of this application.

S800b: At least one group of mapping relationships is configured for a UDM network element in the macro network.

For the mapping relationships, refer to the description of S600a. Details are not described herein again.

For example, a network operator of the macro network registers the mapping relationships in S800b to the UDM network element of the macro network.

S800c: A private key SK_a is configured for an L-UDM network element a in an IOPS network a.

The private key SK_a is used to decrypt a part or all of content of a SUCI.

For S800c, refer to the description of S600b. Details are not described herein again.

The terminal device performs S801 at a specific moment.

S801: The terminal device sends a registration request (registration request) to the AMF network element in the macro network. Correspondingly, the AMF network element in the macro network receives the registration request from the terminal device.

The registration request includes a SUCI and IOPS capability information that are of the terminal device, and the IOPS capability information indicates whether the terminal device has a function of accessing the IOPS network. It should be understood that the registration request is a non-access stratum (non-access stratum, NAS) message. The terminal device includes the NAS message in an access stratum (access stratum, AS) message and sends the NAS message to the RAN device. The RAN device sends the NAS message to the AMF network element over a backhaul link.

When the AMF network element in the macro network determines that the terminal device has an IOPS function and/or a RAN device accessed by the terminal device has an IOPS function, the AMF network element in the macro network determines that the UDM network element in the macro network needs to configure public key information of the IOPS network for the terminal device, so that the terminal device performs an IOPS network access procedure based on the public key information. The RAN device accessed by the terminal device is a RAN device corresponding to a backhaul link over which the AMF network element in the macro network receives the registration request.

For example, after the AMF network element in the macro network receives the registration request from the terminal device through the RAN device, the AMF network element in the macro network obtains identification information of an L-UDM network element a in an IOPS network to which the access network device is attached.

For example, when RAN devices at different locations are attached to different IOPS networks, the AMF network element in the macro network determines the IOPS network based on location information (for example, a cell ID) of the RAN device accessed by the terminal device, and then determines identification information of a UDM network element in the IOPS network. Alternatively, priorities of IOPS networks to which the RAN device accessed by the terminal device is attached are different, and the AMF network element in the macro network may select, based on the priorities of the IOPS networks, an IOPS network whose priority meets a requirement, and then determine information about a UDM network element in the IOPS network. The AMF network element in the macro network may obtain the priority relationship from the RAN device in S800a.

Optionally, the AMF network element in the macro network determines, based on that the RAN device has the IOPS function, that the UDM network element in the macro network needs to configure the public key information of the IOPS network for the terminal device. In this case, the registration request may not include the IOPS capability information.

For another example, for the AMF network element in the macro network, the IOPS capability information can indicate whether the terminal device has a capability of accessing the IOPS network, and the AMF network element in the macro network determines, based on the IOPS capability information in the registration request, whether the terminal device has the IOPS function. When the terminal device has the IOPS function, the AMF network element in the macro network obtains the identification information of the L-UDM network element a in the IOPS network to which the RAN device is attached. The RAN device can provide a communication service for the terminal device.

When the AMF network element in the macro network determines that the UDM network element in the macro network needs to configure the public key information of the IOPS network for the terminal device, the AMF network element in the macro network performs S802.

S802: The AMF network element in the macro network sends a request message to the UDM network element in the macro network. Correspondingly, the UDM network element in the macro network receives the request message from the AMF network element in the macro network.

The request message is used to request public key information corresponding to an L-UDM_a ID. The L-UDM_a ID identifies an L-UDM network element, namely, the L-UDM network element a. The L-UDM network element a is a UDM network element in the IOPS network to which the RAN device connected to the AMF network element in the macro network is attached. The RAN device provides a communication service for the terminal device.

For example, the request message includes at least the L-UDM_a ID. The following describes the request message by using three examples (for example, Example 1, Example 2, and Example 3 below).

Example 1: The request message is a message, for example, Nausf_UEAA_Req and Nudm_UEAA_Req, in a primary authentication process. The Nausf_UEAA_Req is a primary authentication request, namely, an Nausf_UEAuthentication_Authenticate Request, transmitted through an Nausf interface. The Nudm_UEAA_Req is a primary authentication request, namely, an Nudm_UEAuthentication_Authenticate Request, transmitted through an Nudm interface. In this case, both the Nausf_UEAA_Req and the Nudm_UEAA_Req include a SUCI of the terminal device, IOPS public key configuration indication information, and the L-UDM_a ID. The IOPS public key configuration indication information indicates the UDM network element of the macro network to configure the public key information of the IOPS network for the terminal device. The AMF network element first sends the Nausf_UEAA_Req message to the AUSF network element, and then the AUSF network element sends the Nudm_UEAA_Req message to the UDM network element of the macro network.

Example 2: The request message is a message, for example, an Nudm_SDM_Get Request message, after the primary authentication procedure. The Nudm_SDM_Get Request message is used to request to obtain subscription information of the terminal device. In this case, the Nudm_SDM_Get Request message includes a SUPI of the terminal device, the IOPS public key configuration indication information, and the L-UDM_a ID. For the IOPS public key configuration indication information, refer to the description of Example 1 in S802. Details are not described herein again. The AMF network element in the macro network sends the Nudm_SDM_Get Request message to the UDM network element in the macro network. In other words, the Nudm_SDM_Get Request message is a message sent by the AMF network element in the macro network to the UDM network element in the macro network, and does not pass through the AUSF network element. It should be noted that the AMF network element in the macro network obtains the SUPI of the terminal device after the primary authentication succeeds. For details, refer to a related technical specification of the 3GPP.

Example 3: The request message is a dedicated message after the primary authentication procedure. The dedicated message includes the SUPI of the terminal device and the L-UDM_a ID. Optionally, the dedicated message may not include the SUPI of the terminal device. It is easy to understand that the dedicated message is dedicated to requesting the UDM network element of the macro network to configure the public key information of the IOPS network for the terminal device. In this case, the dedicated message may not include the IOPS public key configuration indication information. The AMF network element in the macro network sends the dedicated message to the UDM network element in the macro network. It should be noted that the AMF obtains the SUPI of the terminal device after the primary authentication succeeds. For details, refer to a related technical specification of the 3GPP.

It should be understood that there may be one or more L-UDM IDs determined by the AMF network element in the macro network. For example, when the RAN device accessed by the terminal device is attached to a plurality of IOPS networks, there are a plurality of L-UDM IDs determined by the AMF network element in the macro network. For another example, when the RAN device accessed by the terminal device is attached to one IOPS network, and a plurality of L-UDM network elements are deployed in the IOPS network, there are a plurality of L-UDM IDs determined by the AMF network element in the macro network.

When there are a plurality of L-UDM IDs determined by the AMF network element in the macro network, the request message includes all the L-UDM IDs determined by the AMF network element.

S803: The UDM network element in the macro network determines a public key PK_a based on the L-UDM_a ID and the at least one group of mapping relationships.

The L-UDM_a ID in S803 is consistent with the L-UDM_a ID in S802, and the mapping relationships in S803 are consistent with the mapping relationships in S800b. Details are not described herein again. It should be understood that, in this case, the request message in Example 3 in S802 may not carry the SUPI of the terminal device.

Optionally, when the terminal device has permission to access the IOPS network, the UDM network element in the macro network determines the public key PK_a based on the L-UDM_a ID and the at least one group of mapping relationships. The UDM network element in the macro network obtains the subscription information of the terminal device based on the SUCI or the SUPI of the terminal device, and the UDM network element in the macro network determines, based on the subscription information of the terminal device, whether the terminal device has the permission to access the IOPS network.

It should be noted that if the request message in S802 is a message sent by the AMF network element in the primary authentication process, the UDM network element of the macro network needs to perform S803 after the primary authentication succeeds. For example, the UDM network element of the macro network needs to obtain, based on a primary authentication result confirmation request (Nudm_UEAuthentication_Result Confirmation Request) message transmitted through the Nudm interface, an indication indicating that primary authentication succeeds. The Nudm_UEAuthentication_Result Confirmation Request message may be briefly denoted as Nudm_UEAuth_ResConf.

It should be understood that when the request message includes a plurality of L-UDM IDs, there are also a plurality of public keys determined by the UDM network element of the macro network in S803. Specifically, when there are a plurality of L-UDM IDs determined by the AMF network element in the macro network, the UDM network element in the macro network determines, based on the plurality of L-UDM IDs and the at least one group of mapping relationships, public key information corresponding to each of the plurality of L-UDM IDs.

S804a: The UDM network element in the macro network sends a response message 1 to the AMF network element in the macro network. Correspondingly, the AMF network element in the macro network receives the response message 1 from the UDM network element in the macro network.

S804b: The AMF network element in the macro network sends a response message 2 to the terminal device. Correspondingly, the terminal device receives the response message 2 from the AMF network element in the macro network.

The response message 1 and the response message 2 include at least the public key PK_a. The public key PK_a in S804a and S804b is consistent with the public key PK_a in S803. Details are not described herein again. The response message 1 and the response message 2 may also have other names. For example, if the response message 1 and the response message 2 are used to respond to the message in Example 1 in S802, names of the response message 1 and the response message 2 may be IOPS public key configuration messages. If the response message 1 and the response message 2 are used to respond to the message in Example 2 in S802, names of the response message 1 and the response message 2 may be Nudm_SDM_Get Response messages. For example, if the response message 1 and the response message 2 are used to respond to the message in Example 3 in S802, names of the response message 1 and the response message 2 may be reply messages of the dedicated message. Names of the response messages are not limited in this embodiment of this application.

It should be noted that if the response message 1 and the response message 2 are used to respond to the message in Example 1 in S802, the response message 1 and the response message 2 may be dedicated messages. In this case, in addition to the public key PK_a, the response message 1 further needs to carry the SUPI of the terminal device, where the SUPI is determined by the UDM network element in the macro network based on the SUCI of the terminal device in S802.

It should be understood that when there are a plurality of public keys determined by the UDM network element in the macro network in S803, both the response message 1 and the response message 2 include the plurality of public keys and an L-UDM ID corresponding to each of the plurality of public keys.

S805: The RAN device broadcasts an identifier of the IOPS network a when a connection between the RAN device and a core network device in the macro network is broken.

For the RAN device, because each IOPS network uses one PLMN ID, correspondingly, the identifier of the IOPS network a may be a PLMN ID used by the IOPS network a. The RAN device broadcasts the PLMN ID of the IOPS network a.

It should be understood that when the response message 1 in S804a (or the response message 2 in S804b) includes a plurality of public keys and an L-UDM ID corresponding to each of the plurality of public keys, the RAN device further broadcasts the L-UDM ID. For details, refer to the description of S602. Details are not described herein again.

A terminal device within coverage of the broadcast message in S805 receives the identifier of the IOPS network a. Then, the terminal device may determine that the terminal device needs to access the IOPS network a. For details about determining, by the terminal device, that the terminal device needs to access the IOPS network, refer to the description of FIG. 6. Details are not described herein again. When the terminal device determines that the terminal device needs to access the IOPS network a, the terminal device performs the following steps.

S806: The terminal device protects the SUPI by using the public key PK_a, to obtain the SUCI.

In S806, the terminal device protects the SUPI by using the public key, to obtain the SUCI. For details, refer to the description of S604. Details are not described herein again.

The public key PK_a in S806 is consistent with the public key PK_a in S804. Details are not described herein again.

It should be understood that, when the RAN device with the IOPS function further broadcasts the L-UDM ID in S805, the terminal device determines corresponding PK_a based on the L-UDM ID received in S805 and information included in the response message 2 (to be specific, the response message 2 includes a plurality of public keys and an L-UDM ID corresponding to each of the plurality of public keys) in S804b. For example, the L-UDM ID in S805 is denoted as an L-UDM_a ID, and the response message 2 includes PK_1, an L-UDM_1 ID corresponding to PK_1, PK_2, and an L-UDM_2 ID corresponding to PK_2. The public key PK_a is PK_1 when the L-UDM_a ID is the L-UDM_1 ID. The public key PK_a is PK_2 when the L-UDM_a ID is the L-UDM_2 ID.

In some embodiments, the terminal device includes ME and a USIM, as shown in FIG. 5. In this case, the public key PK_a is information received by the ME. The ME determines that the SUCI may be generated by the USIM, or may be generated by the ME. The following describes S806 by using Example 1 and Example 2.

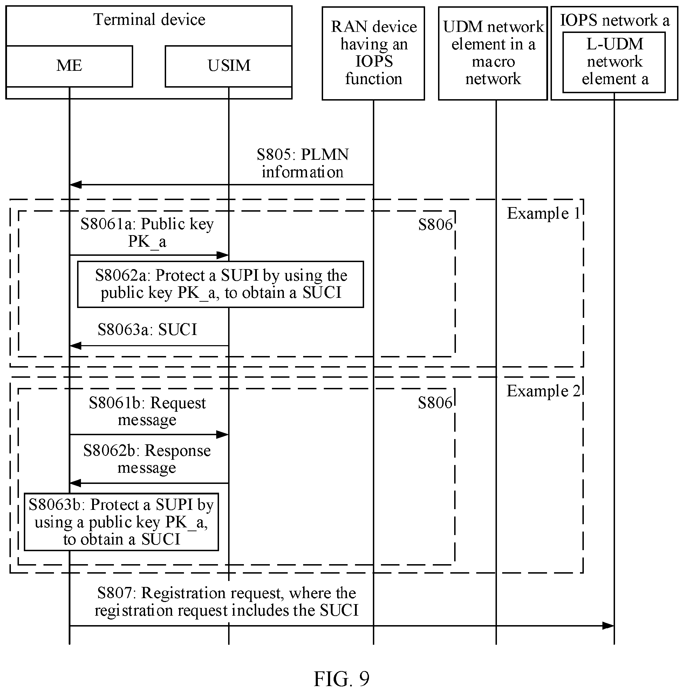

Example 1: When the SUCI is generated by the USIM, as shown in FIG. 9, S806 includes S8061a, S8062a, and S8063a.

S8061a: The ME sends the public key PK_a to the USIM. Correspondingly, the USIM receives the public key PK_a from the ME.

The public key PK_a in S8061a is consistent with the public key PK_a in S804b. Details are not described herein again.

For example, the ME sends the public key PK_a to the USIM by using a get identity command (GET IDENTITY command). A data (Data) field in the get identity command carries the public key PK_a.

S8062a: The USIM protects the SUPI by using the public key PK_a, to obtain the SUCI.

In S8062a, the USIM protects the SUPI by using the public key PK_a, to obtain the SUCI. For a specific description, refer to the description of S604a. Details are not described herein again.

S8063a: The USIM sends the SUCI to the ME. Correspondingly, the ME receives the SUCI from the USIM.

The SUCI in S8063a is consistent with the SUCI in S8062a. Details are not described herein again.

For example, the USIM sends the SUCI to the ME by using a get identity response (GET IDENTITY response).

Example 2: When the SUCI is generated by the ME, as shown in FIG. 9, S806 includes S8061b, S8062b, and S8063b.

S8061b: The ME sends a request message to the USIM. Correspondingly, the USIM receives the request message from the ME.

The request message is used to request information for deriving a SUCI.

For example, for an implementation process of S8061b, refer to the description of S6031b. Details are not described herein again.

S8062b: The USIM sends a response (response) message to the ME. Correspondingly, the ME receives the response message from the USIM.

The response message includes the information for deriving the SUCI, for example, a SUPI, a SUPI type, and protection schemes 1 to n. For example, for an implementation process of S8062b, refer to the description of S6032b. Details are not described herein again.

S8063b: The ME protects the SUPI by using the public key PK_a, to obtain the SUCI.

The ME protects the SUPI by using the public key PK_a, to obtain the SUCI. For a specific description, refer to the description of S604b. Details are not described herein again.

It should be understood that, when the response message 2 includes the plurality of public keys, the terminal device determines a corresponding public key based on an L-UDM ID of a to-be-accessed IOPS network, and protects the SUPI by using a public key corresponding to the IOPS network a, to ensure key separation requirements in different L-UDM deployment cases.

The terminal device performs S807 after determining the SUCI.

S807: The terminal device sends a registration request to the IOPS network a. Correspondingly, the IOPS network a receives the registration request from the terminal device.

For an implementation process of S807, refer to the description of S605. Details are not described herein again.

The L-UDM network element a performs S808 after receiving the SUCI.

S808: The L-UDM network element a obtains the SUPI based on the private key SK_a and the SUCI, and then continues a subsequent registration procedure based on the registration request. For a specific registration procedure, refer to a related protocol specification of the 3GPP.

The private key SK_a in S808 is consistent with the private key SK_a in S800c. For an implementation process of S808, refer to the description of S606. Details are not described herein again.

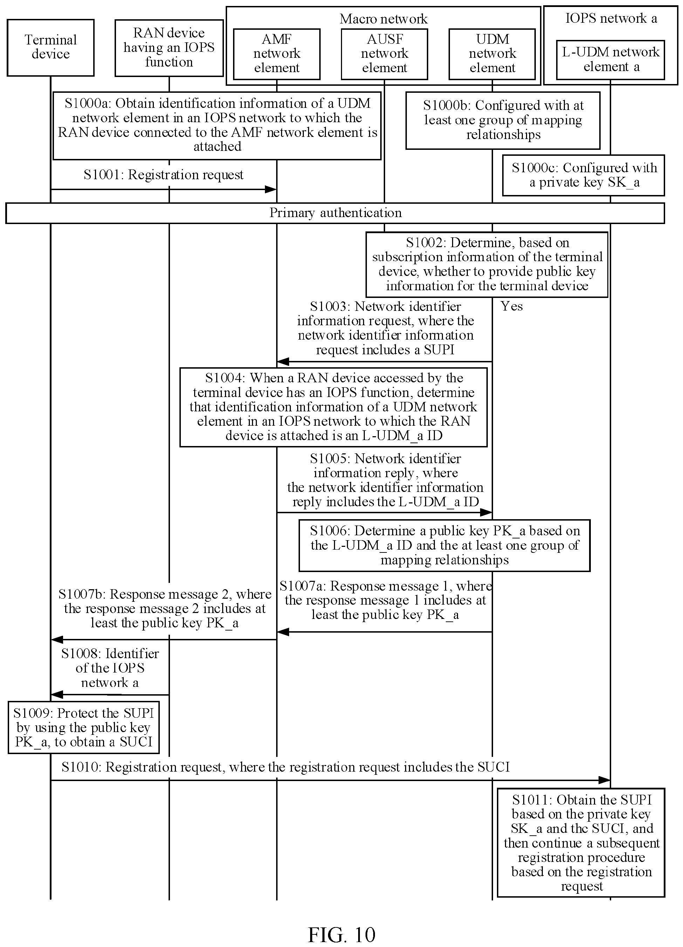

For example, FIG. 10 is a schematic flowchart 3 of a key management method according to an embodiment of this application. The key management method is applicable to a process in which a terminal device accesses an IOPS network. As shown in FIG. 10, a procedure of the key management method is as follows:
S1000a: An AMF network element in a macro network obtains information about a UDM network element in an IOPS network to which a RAN device connected to the AMF network element is attached.
   For an implementation process of S1000a, refer to the description of S800a. Details are not described herein again.
S1000b: At least one group of mapping relationships is configured for a UDM network element in the macro network.
   For an implementation process of S1000b, refer to the description of S800b. Details are not described herein again.
S1000c: A private key SK_a is configured for an L-UDM network element a in an IOPS network a.

The private key SK_a is used to decrypt a part or all of content of a SUCI.

For an implementation process of S1000c, refer to the description of S800c. Details are not described herein again.

The terminal device performs S1001 at a specific moment.

S1001: A terminal device sends a registration request (registration request) to the AMF network element in the macro network. Correspondingly, the AMF network element in the macro network receives the registration request from the terminal device.

The registration request includes the SUCI. Compared with the registration request in S801, the registration request in S1001 does not include IOPS capability information.

It should be understood that after the terminal device sends the registration request to the AMF network element in the macro network, the terminal device, the AMF network element in the macro network, an AUSF network element in the macro network, and the UDM network element in the macro network perform a primary authentication process. The primary authentication process is described as follows: The AMF network element in the macro network triggers the primary authentication process based on the registration request, and sends a primary authentication request to the AUSF network element in the macro network. Then, the AUSF network element in the macro network requests the UDM network element in the macro network to decrypt the part (or all) of the content of the SUCI of the terminal device, to obtain a SUPI of the terminal device. After decrypting the part (or all) of the content of the SUCI, the UDM network element in the macro network obtains the SUPI, and continues a subsequent primary authentication process based on the SUPI. For a specific process of primary authentication, refer to a related technology. Details are not described herein again. When the primary authentication succeeds, the AUSF network element in the macro network sends a primary authentication result confirmation request (Nudm_UEAuthentication_Result Confirmation Request) to the UDM network element in the macro network, to indicate that the primary authentication succeeds. The UDM network element in the macro network performs S1002 after the primary authentication succeeds.

S1002: The UDM network element in the macro network determines, based on subscription information of the terminal device, whether to provide public key information for the terminal device.

The UDM network element in the macro network pre-stores the subscription information of the terminal device. The subscription information indicates whether the terminal device has permission to access the IOPS network. When determining, based on the subscription information, that the terminal device has the permission to access the IOPS network, the UDM network element in the macro network needs to provide the public key information for the terminal device. On the contrary, when determining, based on the subscription information, that the terminal device does not have the permission to access the IOPS network, the UDM network element in the macro network does not need to provide the public key information for the terminal device.

In some embodiments, S1002 includes:
When a preset condition is met, the UDM network element in the macro network determines, based on the subscription information of the terminal device, whether to provide the public key information for the terminal device.

The preset condition includes at least one of the following:
Preset condition 1: The UDM network element in the macro network receives indication information. The indication information indicates that primary authentication of the terminal device succeeds. For example, the indication information may include the foregoing Nudm_UEAuthentication_Result Confirmation Request message.

Preset condition 2: The UDM network element in the macro network receives a subscription information request. The subscription information request is used to request the subscription information of the terminal device. For example, the subscription information request may include an Nudm_SDM_Get Request or an Nudm_SDM_Subscribe Request message. It should be understood that the subscription information request is a message transmitted after the primary authentication of the terminal device succeeds.

Preset condition 3: The UDM network element in the macro network receives a message from the AMF network element, where the message is another message, for example, an Nudm_UDCM_Registration Request, an Nudm_UDCM_Update Request, or an Nudm_SDM_Info Request message, different from those in the preset condition 1 and the preset condition 2, and is transmitted between the AMF network element in the macro network and the UDM network element in the macro network.

It should be understood that when the UDM network element in the macro network determines that a preset condition is met, it means that the terminal device is a valid user. In this case, the UDM network element in the macro network provides the public key information for the terminal device, to reduce a possibility of public key information leakage.

When the UDM network element in the macro network determines to provide the public key information for the terminal device, the UDM network element in the macro network performs S1003.

S1003: The UDM network element in the macro network sends a network identifier information request to the AMF network element in the macro network. Correspondingly, the AMF network element in the macro network receives the network identifier information request from the UDM network element in the macro network.

The network identifier information request is used to request information about an L-UDM network element in the IOPS network. For example, the network identifier information request includes the SUPI of the terminal device. The SUPI in the network identifier information request is determined by the UDM network element in the macro network in the primary authentication process.

Specifically, the network identifier information request carries the SUPI of the terminal device, so that the AMF network element in the macro network determines, based on the SUPI, the terminal device and a RAN accessed by the terminal device.

S1004: When a RAN device accessed by the terminal device has an IOPS function, the AMF network element in the macro network determines that identification information of a UDM network element in an IOPS network to which the RAN device is attached is an L-UDM_a ID.

Specifically, the RAN device accessed by the terminal device is a RAN device corresponding to a backhaul link over which the AMF receives the registration request, and the AMF determines, based on the description of S800a, that the RAN device has the IOPS function.

It should be understood that, in this embodiment of this application, an example in which the UDM network element in the IOPS network to which the RAN device is attached is denoted as the L-UDM network element a is used for description. The L-UDM network element a is one of n L-UDM network elements (namely, an L-UDM network element 1 to an L-UDM network element n).

S1005: The AMF network element in the macro network sends a network identifier information reply to the UDM network element in the macro network. Correspondingly, the UDM network element in the macro network receives the network identifier information reply from the AMF network element in the macro network.

The network identifier information reply includes the L-UDM_a ID.

It should be noted that when the RAN device accessed by the terminal device does not have the IOPS function, the AMF network element in the macro network sends a first message to the UDM network element in the macro network. The first message indicates to terminate a public key information obtaining procedure. Alternatively, the first message indicates that the UDM network element in the macro network does not need to provide the public key information for the terminal device.

The UDM network element in the macro network performs S1006 after receiving the L-UDM_a ID.

S1006: The UDM network element in the macro network determines a public key PK_a based on the L-UDM_a ID and at least one group of mapping relationships.

The mapping relationships in S1006 are consistent with the mapping relationships in S1000b. For an implementation process of S1006, refer to the description of S6033b. Details are not described herein again.

S1007a: The UDM network element in the macro network sends a response message 1 to the AMF network element in the macro network. Correspondingly, the AMF network element in the macro network receives the response message 1 from the UDM network element in the macro network.

For an implementation process of S1007a, refer to the description of S804a. Details are not described herein again.

S1007b: The AMF network element in the macro network sends a response message 2 to the terminal device. Correspondingly, the terminal device receives the response message 2 from the AMF network element in the macro network.

For an implementation process of S1007b, refer to the description of S804b. Details are not described herein again.

S1008: The RAN device broadcasts an identifier of the IOPS network a when a connection between the RAN device and the core network element of the macro network is broken.

For an implementation process of S1008, refer to the description of S805. Details are not described herein again.

A terminal device within coverage of the broadcast message in S1008 receives the identifier of the IOPS network a. Then, the terminal device may determine that the terminal device needs to access the IOPS network a. For details, refer to the description of FIG. 6. Details are not described herein again. When the terminal device determines that the terminal device needs to access the IOPS network a, the terminal device performs the following steps.

S1009: The terminal device protects the SUPI by using the public key PK_a, to obtain the SUCI.

For an implementation process of S1009, refer to the description of S806. Details are not described herein again.

S1010: The terminal device sends a registration request to the IOPS network a. Correspondingly, the IOPS network a receives the registration request from the terminal device.

For an implementation process of S1010, refer to the description of S605. Details are not described herein again.

The L-UDM network element a performs S1011 after receiving the SUCI.

S1011: The L-UDM network element a obtains the SUPI based on the private key SK_a and the SUCI, and then continues a subsequent registration procedure based on the registration request. For a specific registration procedure, refer to a related protocol specification of the 3GPP.

The private key SK_a in S1011 is consistent with the private key SK_a in S1000c. For an implementation process of S1011, refer to the description of S606. Details are not described herein again.

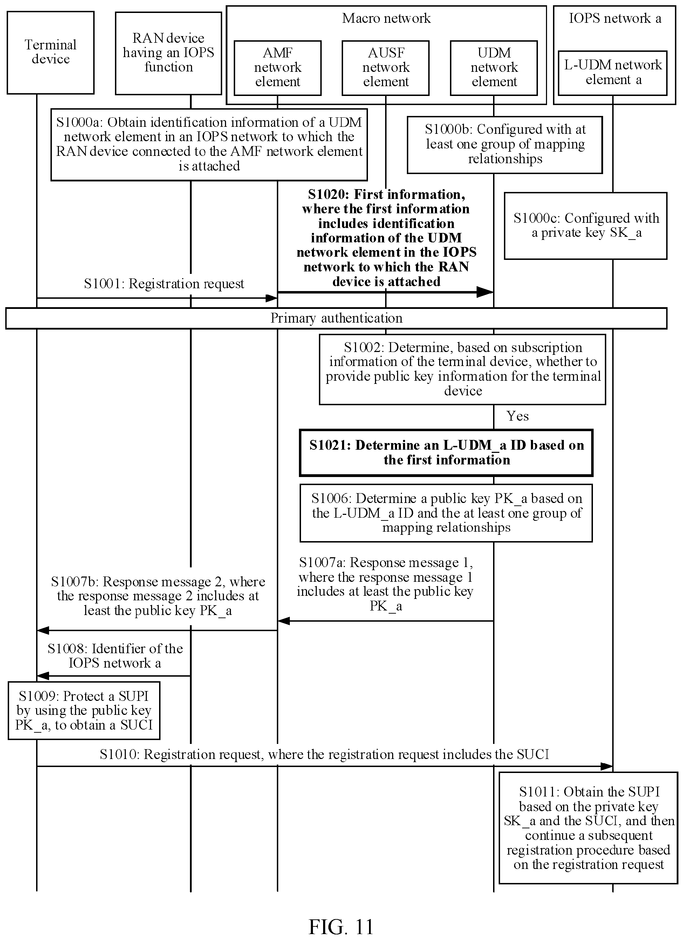

It should be noted that the UDM network element in the macro network may further obtain the L-UDM_a ID by using S1020 and S1021. Compared with the key management method shown in FIG. 10, in a key management method shown in FIG. 11, S1003, S1004, and S1005 do not need to be performed, but S1020 and S1021 are performed, as shown in bold words in FIG. 11. S1020 and S1021 are described as follows.

The AMF network element in the macro network performs S1020 after performing S1000a.

S1020: The AMF network element in the macro network sends first information to the UDM network element in the macro network. Correspondingly, the UDM network element in the macro network receives the first information from the AMF network element in the macro network.

The first information includes at least identification information of the UDM in the IOPS network to which the RAN device is attached. The RAN device related to the first information is connected to the AMF network element. In other words, the first information includes at least the information in S1000a.

For example, the AMF network element in the macro network may establish a connection to the UDM network element in the macro network when a device is powered on, and perform S1020 in a connection establishment process, so that the UDM network element in the macro network learns of the information in S1000a.

After S1002, when determining to provide the public key information for the terminal device, the UDM network element in the macro network does not perform S1003 and S1005 (as shown in FIG. 10), but performs S1021.

S1021: The UDM network element in the macro network determines the L-UDM_a ID based on the first information.

For example, when the first information includes one L-UDM ID, the L-UDM ID in the first information is the L-UDM_a ID. When the first information includes a plurality of L-UDM IDs, the UDM network element in the macro network selects one L-UDM ID from the plurality of L-UDM IDs as the L-UDM_a ID. In a possible implementation, when the first information includes a plurality of L-UDM IDs and a cell ID, the UDM network element in the macro network may select, based on the cell ID, one IOPS network from IOPS networks to which the RAN device connected to the AMF network element is attached, and then determine information about a UDM network element in the selected IOPS network based on the IOPS network.

It should be understood that for descriptions of S1006 to S1011 in FIG. 11, refer to the descriptions of S1006 to S1011 in FIG. 10. Details are not described herein again.

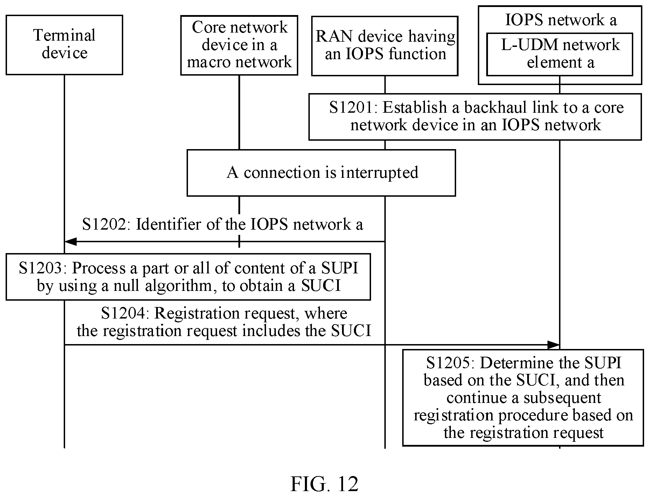

For example, FIG. 12 is a schematic flowchart 4 of a key management method according to an embodiment of this application. The key management method is applicable to a process in which a terminal device accesses an IOPS network. As shown in FIG. 12, a procedure of the key management method is as follows:
S1201: A RAN device establishes a backhaul link to a core network device in an IOPS network.
   The backhaul link in S1201 is a communication link between a RAN device having an IOPS function and the core network device in the IOPS network. For details, refer to the description of S601. Details are not described herein again.
S1202: The RAN device broadcasts identification information of an IOPS network a when a connection between the RAN device and a core network device in the macro network is broken.
   A terminal device within coverage of the broadcast message in S1202 receives the identification information of the IOPS network a from the RAN device, and determines that the terminal device needs to access the IOPS network a. For details, refer to the description of FIG. 6. Details are not described herein again. When the terminal device determines that the terminal device needs to access the IOPS network a, the terminal device performs the following steps.
S1203: The terminal device processes a part or all of content of a SUPI by using a null algorithm, to obtain a SUCI.

For example, the terminal device encrypts user identity information by using the null algorithm and a default encryption key, to obtain a hidden user identity. The default encryption key is a null key. For example, the default encryption key may be represented by using all bits that are all zeros. For example, the default encryption key is 00000000 if a length of the default encryption key is eight bits (bits). The hidden user identity further includes an encryption key identifier (Key ID). The encryption key identifier identifies an encryption key, for example, a value is a number from 0 to 255. In this embodiment of this application, a value of the encryption key identifier is 0, to identify the null key. In other words, when the terminal device performs processing by using the null algorithm, input content and output content of the null algorithm are the same. The null algorithm may be denoted as NULL -scheme.

In some embodiments, the terminal device includes ME and a USIM, as shown in FIG. 5. In this case, the SUCI may be generated by the USIM or may be generated by the ME. The following describes S1203 by using Example 1 and Example 2.

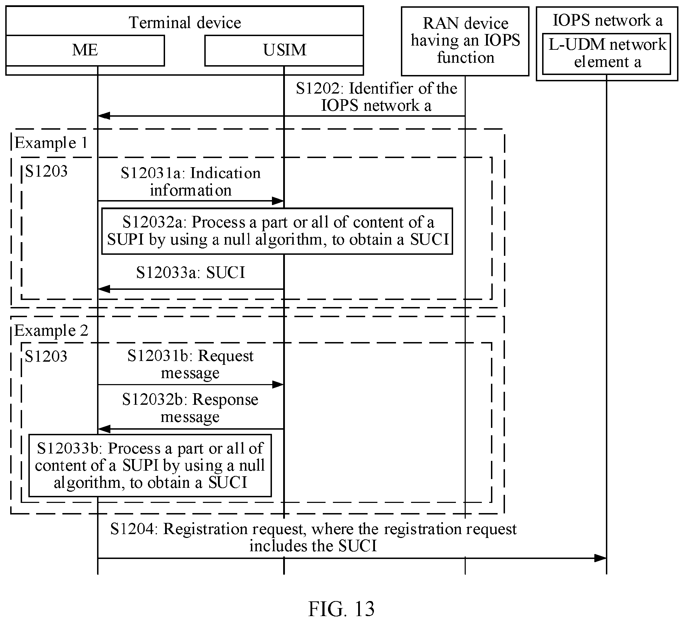

Example 1: When the SUCI is generated by the USIM, as shown in FIG. 13, S1203 includes S12031a, S12032a, and S12033a.

S12031a: The ME sends indication information to the USIM. Correspondingly, the USIM receives the indication information from the ME.

The indication information indicates to generate the SUCI by using the null algorithm.

For example, the ME sends the indication information to the USIM by using a get identity command (GET IDENTITY command). A data (Data) field in the get identity command carries the indication information. The indication information may be "IOPS" or "NULL-scheme".

S12032a: The USIM processes the part or all of the content of the SUPI by using the null algorithm, to obtain the SUCI.

S12033a: The USIM sends the SUCI to the ME. Correspondingly, the ME receives the SUCI from the USIM.

The SUCI in S12033a is consistent with the SUCI in S12032a. Details are not described herein again.

For example, the USIM sends the SUCI to the ME by using a get identity response (GET IDENTITY response).

Example 2: When the SUCI is generated by the ME, as shown in FIG. 13, S1203 includes S12031b, S12032b, and S12033b.

S12031b. The ME sends a request message to the USIM. Correspondingly, the USIM receives the request message from the ME.

The request message is used to request information for deriving a SUCI.

For example, for an implementation process of S12031b, refer to the description of S6031b. Details are not described herein again.

S12032b: The USIM sends a response (response) message to the ME. Correspondingly, the ME receives the response message from the USIM.

The response message includes the information for deriving the SUCI, for example, a SUPI, a SUPI type, and protection schemes 1 to n. For example, for an implementation process of S12032b, refer to the description of S6032b. Details are not described herein again.

S12033b: The ME processes the part or all of the content of the SUPI by using the null algorithm, to obtain the SUCI.

The terminal device performs S1204 after determining the SUCI.

S1204: The terminal device sends a registration request to the IOPS network a. Correspondingly, the IOPS network a receives the registration request from the terminal device.

For an implementation process of S1204, refer to the description of S605. Details are not described herein again.

The L-UDM network element a performs S1205 after receiving the SUCI.

S1205: The L-UDM network element a determines the SUPI based on the SUCI.

For example, the L-UDM network element a uses received user identity information, namely, the SUCI, as the SUPI. Alternatively, the L-UDM network element a processes a part or all of content of the SUCI by using the null algorithm, to obtain the SUPI. It should be understood that, in S1203, when the terminal device processes the part of the content of the SUPI by using the null algorithm, in S1205, the L-UDM network element a processes the part of the content of the SUCI by using the null algorithm. In S1203, when the terminal device processes all of the content of the SUPI by using the null algorithm, in S1205, the L-UDM network element a processes all of the content of the SUCI by using the null algorithm.

The L-UDM network element a continues a registration process after obtaining the SUPI.

It should be noted that, in this embodiment of this application, when a public key PK_a is used to encrypt the part of the content of the SUPI, correspondingly, a private key SK_a decrypts the part of the content of the SUCI. When the public key PK_a is used to encrypt all of the content of the SUPI, correspondingly, the private key SK_a decrypts all of the content of the SUCI.

In this embodiment of this application, the key management methods shown in FIG. 6 and FIG. 12 may be applied to the scenario in FIG. 2, or may be applied to the scenario in FIG. 3. The key management methods shown in FIG. 8, FIG. 10, and FIG. 11 may be applied to the scenario in FIG. 3.

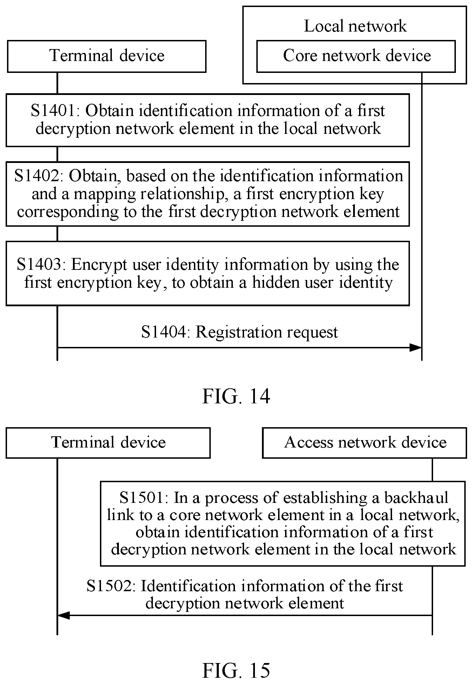

FIG. 14 shows still another key management method according to an embodiment of this application. The method may be applied to the network architectures shown in FIG. 1a and FIG. 1b, and specifically implements the key management method corresponding to FIG. 6.

S1401: A terminal device obtains identification information of a first decryption network element in a local network.

For example, when the method shown in FIG. 14 is specifically applied to the method shown in FIG. 6, the local network is an IOPS network a, the first decryption network element is an L-UDM network element a in the IOPS network a, and the identification information of the first decryption network element is an L-UDM_a ID. For a specific implementation process of S1401, refer to related descriptions of S602. Details are not described herein again.

In a possible design, S1401 includes: The terminal device receives a broadcast message, where the broadcast message includes the identification information of the first decryption network element and an identifier of the local network. For details, refer to the description of S602. Details are not described herein again.

In a possible design, S1401 includes: The terminal device receives the identifier of the local network and a first identifier from an access network device, where the first identifier identifies a decryption network element in the local network. The terminal device determines the identification information of the first decryption network element based on the identifier of the local network and the first identifier. For details, refer to the description of S602. Details are not described herein again.

In a possible design, the terminal device performs S1402, S1403, and S1404 in response to the broadcast message. For details, refer to the description of S602. Details are not described herein again.

In a possible design, the identifier of the local network is a public land mobile network identifier PLMN ID used by the local network. For details, refer to the description of S602. Details are not described herein again.

S1402: The terminal device obtains, based on the identification information and a mapping relationship, a first encryption key corresponding to the first decryption network element.

The mapping relationship records at least one decryption network element and an encryption key corresponding to each of the at least one decryption network element, and the at least one decryption network element includes the first decryption network element.

For example, the first encryption key is PK_a when the method shown in FIG. 14 is specifically applied to the method shown in FIG. 6. For a specific implementation process of S1402, refer to related descriptions of S603. Details are not described herein again.

The mapping relationship is preconfigured. For details, refer to the description of FIG. 7a. Details are not described herein again.

Alternatively, the mapping relationship may be obtained by the terminal device from a macro network. For example, the terminal device receives the mapping relationship from a second decryption network element in the macro network through the access network device. For details, refer to the description of FIG. 7b. Details are not described herein again.

In a possible design, the mapping relationship is carried in a registration accept message. For details, refer to the description of S614 in FIG. 7b. Details are not described herein again.

In a possible design, the mapping relationship is carried in a user equipment configuration update command message. For details, refer to the description of FIG. 7b. Details are not described herein again.

S1403: The terminal device encrypts user identity information by using the first encryption key, to obtain a hidden user identity.

For example, when the method shown in FIG. 14 is specifically applied to the method shown in FIG. 6, the user identity information is a part of the SUPI, and the hidden user identity is the SUCI. For a specific implementation process of S1403, refer to related descriptions of S604. Details are not described herein again.

S1404: The terminal device sends a registration request to the local network through the access network device. Correspondingly, the local network receives the registration request from the terminal device through the access network device.

The registration request includes the hidden user identity.

For example, when the method shown in FIG. 14 is specifically applied to the method shown in FIG. 6, for a specific implementation process of S1404, refer to related descriptions of S605. Details are not described herein again.

In a possible design, the terminal device further sends capability information to an access and mobility management network element in the macro network, where the capability information indicates that the terminal device has a capability of accessing the local network, so that a core network element in the macro network learns of the capability of the terminal device. For example, the registration request further includes the capability information. For details, refer to the description of S611. Details are not described herein again.

FIG. 15 shows still another key management method according to an embodiment of this application. The method may be applied to the network architectures shown in FIG. 1a and FIG. 1b, and specifically implements the key management method corresponding to FIG. 6.

S1501: In a process of establishing a backhaul link between an access network device and a core network element in a local network, the access network device obtains identification information of a first decryption network element in the local network.

For example, when the method shown in FIG. 15 is specifically applied to the method shown in FIG. 6, the local network is an IOPS network a, the first decryption network element is an L-UDM network element a in the IOPS network a, and the identification information of the first decryption network element is an L-UDM_a ID. For a specific implementation process of S1501, refer to related descriptions of S601. Details are not described herein again.

In a possible design, the method further includes: The access network device establishes the backhaul link to the core network element in the local network when a connection between the access network device and a core network element in a macro network is broken. For details, refer to the description of S601. Details are not described herein again.

For example, when the backhaul link includes an IPsec link, the access network device establishes the IPsec link to the core network element in the local network. The access network device receives the identification information of the first decryption network element from the core network element in the local network by using an IKE_SA_INIT message or an IKE_AUTH message, so that the access network device obtains the identification information of the first decryption network element in a process of establishing the IPsec link.

For example, when the backhaul link includes a DTLS link, the access network device establishes the DTLS link to the core network element in the local network. The access network device receives the identification information of the first decryption network element from the core network element in the local network by using a handshake message, so that the access network device obtains the identification information of the first decryption network element in a process of establishing the DTLS link.

S1502: The access network device sends the identification information of the first decryption network element.

For example, when the method shown in FIG. 15 is specifically applied to the method shown in FIG. 6, for a specific implementation process of S1502, refer to related descriptions of S602. Details are not described herein again.

In a possible design, S1502 includes: The access network device sends a broadcast message. The broadcast message includes the identification information of the first decryption network element and an identifier of the local network. For details, refer to the description of S602. Details are not described herein again.

In a possible design, S1502 includes: The access network device sends the identifier of the local network and a first identifier. The identifier of the local network and the first identifier are used to determine the identification information of the first decryption network element. For details, refer to the description of S602. Details are not described herein again.

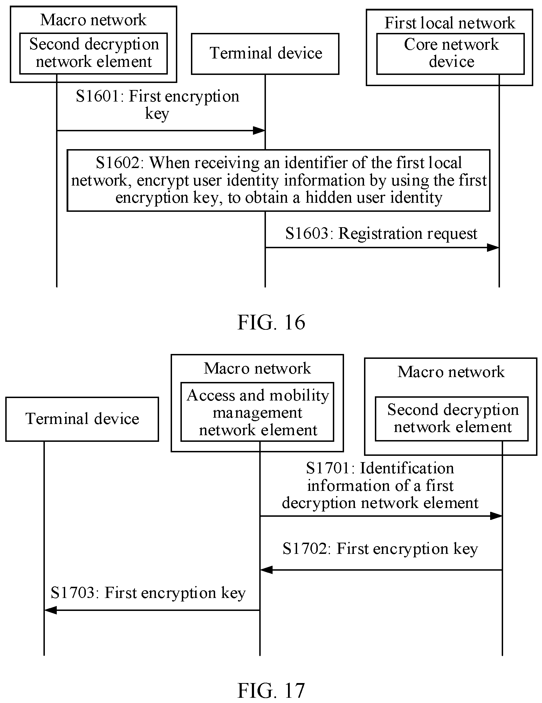

FIG. 16 shows still another key management method according to an embodiment of this application. The method may be applied to the network architectures shown in FIG. 1a and FIG. 1b, and specifically implements the key management method corresponding to FIG. 8 or FIG. 10.

S1601: A second decryption network element in a macro network sends a first encryption key to a terminal device. Correspondingly, the terminal device receives the first encryption key from the second decryption network element in the macro network.

There is a correspondence between the first encryption key and a first local network.

For example, when the method shown in FIG. 16 is specifically applied to the method shown in FIG. 8 or FIG. 10, the second decryption network element in the macro network is a UDM network element in the macro network, and the first encryption key is PK_a. For a specific implementation process of S1501, refer to related descriptions of S804b or S1007b. Details are not described herein again.

S1602: When the terminal device receives an identifier of the first local network, the terminal device encrypts user identity information by using the first encryption key, to obtain a hidden user identity.

For example, when the method shown in FIG. 16 is specifically applied to the method shown in FIG. 8 or FIG. 10, the first local network is the IOPS network a, the user identity information is a part of the SUPI, and the hidden user identity is the SUCI. For a specific implementation process of S1602, refer to related descriptions of S806 or S1009. Details are not described herein again.

S1603: The terminal device sends a registration request to the first local network. Correspondingly, the first local network receives the registration request from the terminal device.

The registration request includes the hidden user identity.

For example, when the method shown in FIG. 16 is specifically applied to the method shown in FIG. 8 or FIG. 10, for a specific implementation process of S1603, refer to related descriptions of S807 or S1010. Details are not described herein again.

In a possible design, the method further includes: The terminal device sends capability information to an access and mobility management network element in the macro network, where the capability information indicates that the terminal device has a capability of accessing the local network, so that a core network element in the macro network learns the capability of the terminal device. For example, the registration request further includes the capability information. For details, refer to the description of S807 or S1010. Details are not described herein again.

FIG. 17 shows still another key management method according to an embodiment of this application. The method may be applied to the network architectures shown in FIG. 1a and FIG. 1b, and specifically implements the key management method corresponding to FIG. 8 or FIG. 10.

S1701: An access and mobility management network element in a macro network sends identification information of a first decryption network element to a second decryption network element in the macro network. Correspondingly, the second decryption network element in the macro network receives the identification information of the first decryption network element from the access and mobility management network element in the macro network.

The first decryption network element is a network element in a first local network.

For example, when the method shown in FIG. 17 is specifically applied to the method shown in FIG. 8 or FIG. 10, the access and mobility management network element in the macro network may be an AMF network element in the macro network, the second decryption network element in the macro network may be a UDM network element in the macro network, the first local network is an IOPS network a, the first decryption network element is an L-UDM network element a, and the identification information of the first decryption network element is an L-UDM_a ID. For a specific implementation process of S1701, refer to related descriptions of S802 or S1005. Details are not described herein again.

In a possible design, the method further includes: The access and mobility management network element in the macro network obtains the identification information of the first decryption network element in a local network to which an access network device is attached. The access network device is configured to transmit a registration request of a terminal device to the access and mobility management network element in the macro network. For details, refer to related descriptions of S802 or S1005. Details are not described herein again.

In a possible design, the method further includes: The access and mobility management network element in the macro network determines the identification information of the first decryption network element in the first local network when the access and mobility management network element in the macro network determines that the access network device has a capability of accessing the local network. The access network device is configured to provide a communication service for the terminal device. For details, refer to related descriptions of S801 and S802 in FIG. 8. Details are not described herein again.

In a possible design, the method further includes: The access and mobility management network element in the macro network receives capability information from the terminal device. The capability information indicates a capability of the terminal device to access the local network. When the access and mobility management network element determines that the terminal device has the capability of accessing the local network, the access and mobility management network element in the macro network determines the identification information of the first decryption network element in the first local network. For details, refer to related descriptions of S801 and S802 in FIG. 8. Details are not described herein again.

In a possible design, S 1701 includes: The access and mobility management network element in the macro network sends the identification information of the first decryption network element to the second decryption network element in the macro network by using a subscription information request. For details, refer to the description of S802. Details are not described herein again.

In a possible design, the method further includes: The access and mobility management network element in the macro network sends indication information to the second decryption network element in the macro network. The indication information indicates the second decryption network element in the macro network to provide an encryption key for the terminal device. For details, refer to the description of S802. Details are not described herein again. For example, the subscription information request includes the indication information.

In a possible design, the method further includes: The access and mobility management network element in the macro network receives a request message from the second decryption network element in the macro network. The request message is used to request the identification information of the first decryption network element. S1701 includes: The access and mobility management network element in the macro network sends the identification information of the first decryption network element to the second decryption network element in the macro network based on the request message. For details, refer to descriptions of S1003 and S1004. Details are not described herein again.

S1702: The second decryption network element in the macro network sends a first encryption key to the access and mobility management network element in the macro network. Correspondingly, the access and mobility management network element in the macro network receives the first encryption key from the second decryption network element in the macro network.

The first encryption key is associated with the first decryption network element.

For example, the first encryption key is PK_a when the method shown in FIG. 17 is specifically applied to the method shown in FIG. 8 or FIG. 10. For a specific implementation process of S1702, refer to related descriptions of S804a or S1007a. Details are not described herein again.

S1703: The access and mobility management network element in the macro network sends the first encryption key to the terminal device. Correspondingly, the terminal device receives the first encryption key from the access and mobility management network element in the macro network.

For example, when the method shown in FIG. 17 is specifically applied to the method shown in FIG. 8 or FIG. 10, for a specific implementation process of S1703, refer to related descriptions of S804b or S1007b. Details are not described herein again.

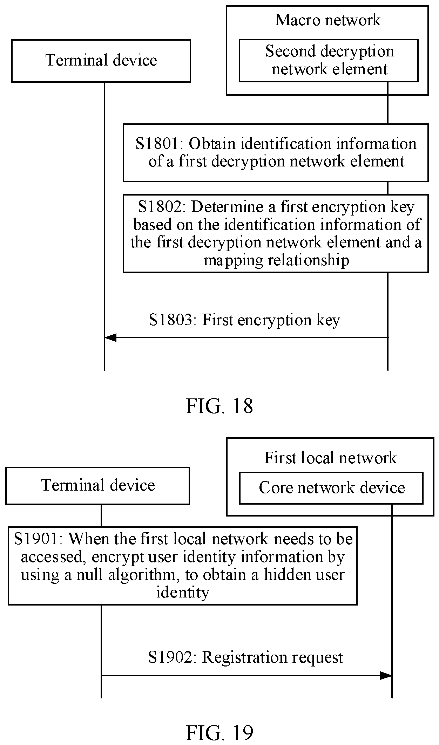

FIG. 18 shows still another key management method according to an embodiment of this application. The method may be applied to the network architectures shown in FIG. 1a and FIG. 1b, and specifically implements the key management method corresponding to FIG. 8 or FIG. 10.

S1801: A second decryption network element in a macro network obtains identification information of a first decryption network element.

The first decryption network element is a network element in a first local network.

For example, when the method shown in FIG. 18 is specifically applied to the method shown in FIG. 8 or FIG. 10, the second decryption network element in the macro network may be a UDM network element in the macro network, the first local network is an IOPS network a, the first decryption network element is an L-UDM network element a, and the identification information of the first decryption network element is an L-UDM_a ID. For a specific implementation process of S1801, refer to related descriptions of S802, S1005, or S1021. Details are not described herein again.

In a possible design, S1801 includes: The second decryption network element in the macro network receives the identification information of the first decryption network element from an access and mobility management network element in the macro network. Refer to related descriptions of S802, S1005, or S1021. Details are not described herein again.

In a possible design, the method further includes: The second decryption network element in the macro network receives first information from an access and mobility management network element in the macro network. The first information includes identification information of a decryption network element corresponding to each of at least one local network, and the at least one local network includes the first local network. That a second decryption network element in a macro network obtains identification information of a first decryption network element includes: The second decryption network element in the macro network obtains the identification information of the first decryption network element from the first information based on local network subscription information of the terminal device and information about a first access network device. The first access network device is configured to provide a communication service for the terminal device. For details, refer to the description of FIG. 11. Details are not described herein again.

In a possible design, that a second decryption network element in a macro network obtains identification information of a first decryption network element includes: The second decryption network element in the macro network obtains the identification information of the first decryption network element from preconfigured information based on local network subscription information of the terminal device and information about a first access network device. The preconfigured information includes identification information of a decryption network element corresponding to each of at least one local network, the at least one local network includes the first local network, and the first access network device is configured to provide a communication service for the terminal device. For details, refer to the description in FIG. 11. Details are not described herein again.

S1802: The second decryption network element in the macro network determines a first encryption key based on the identification information of the first decryption network element and a mapping relationship.

The mapping relationship records at least one decryption network element and an encryption key corresponding to each of the at least one decryption network element, and the at least one decryption network element includes the first decryption network element.

For example, the first encryption key is PK_a when the method shown in FIG. 18 is specifically applied to the method shown in FIG. 8 or FIG. 10. For a specific implementation process of S1802, refer to related descriptions of S803 or S1006. Details are not described herein again.

S1803: The second decryption network element in the macro network sends the first encryption key to the terminal device. Correspondingly, the terminal device receives the first encryption key from the second decryption network element in the macro network.

The first encryption key corresponds to the first decryption network element.

For example, when the method shown in FIG. 18 is specifically applied to the method shown in FIG. 8 or FIG. 10, for a specific implementation process of S1803, refer to related descriptions of S804a and S804b, or for a specific implementation process of S1803, refer to related descriptions of S1007a and S1007b. Details are not described herein again.

In a possible design, the method further includes: The second decryption network element in the macro network receives indication information from the access and mobility management network element in the macro network. The indication information indicates the second decryption network element in the macro network to provide an encryption key for the terminal device. For details, refer to the description of S802. Details are not described herein again. That the second decryption network element in the macro network sends the first encryption key to a terminal device includes: The second decryption network element in the macro network sends the first encryption key to the terminal device based on the indication information.

FIG. 19 shows still another key management method according to an embodiment of this application. The method may be applied to the network architectures shown in FIG. 1a and FIG. 1b, and specifically implements the key management method corresponding to FIG. 13.

S1901: When a terminal device needs to access a first local network, the terminal device encrypts user identity information by using a null algorithm, to obtain a hidden user identity.

For example, when the method shown in FIG. 19 is specifically applied to the method shown in FIG. 13, the first local network is an IOPS network a, the user identity information is a part of a SUPI, and the hidden user identity is a SUCI. For a specific implementation process of S1901, refer to related descriptions of S1203. Details are not described herein again.

In a possible design, that the terminal device encrypts user identity information by using a null algorithm, to obtain a hidden user identity includes: The terminal device encrypts the user identity information by using the null algorithm and a default encryption key, to obtain the hidden user identity. The hidden user identity further includes an identifier of the default encryption key, and a value of the identifier is 0. The default encryption key is a null key. For example, the default encryption key may be represented by using all bits that are all zeros. Refer to related descriptions of S1203. Details are not described herein again.

S1902: The terminal device sends a registration request to the first local network through an access network device. Correspondingly, the first local network receives the registration request from the terminal device.

The registration request includes the hidden user identity.

For example, when the method shown in FIG. 19 is specifically applied to the method shown in FIG. 13, for a specific implementation process of S 1902, refer to related descriptions of S1204. Details are not described herein again.

The foregoing mainly describes the solutions provided in embodiments of this application from a perspective of interaction between network elements. Correspondingly, an embodiment of this application further provides a communication apparatus. The communication apparatus may be the network element in the foregoing method embodiment, an apparatus including the foregoing network element, or a component that can be used in a network element. It may be understood that, to implement the foregoing functions, the communication apparatus includes a hardware structure and/or a software module for performing a corresponding function. A person of ordinary skill in the art should easily be aware that, in combination with the examples described in embodiments disclosed in this specification, modules, algorithms, and steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

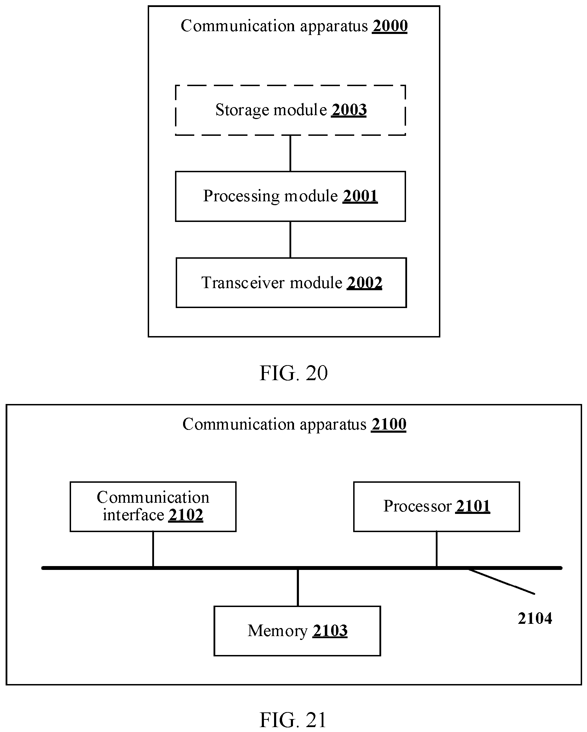

For example, FIG. 20 is a diagram of a structure of a communication apparatus 2000. The communication apparatus 2000 includes a processing module 2001 and a transceiver module 2002.

In a possible example, an example in which the communication apparatus 2000 is a terminal device is used. The processing module 2001 is configured to support the terminal device in performing S1401, S1402, and S1403 in FIG. 14 and/or another processing operation that needs to be performed by the terminal device in this embodiment of this application. The transceiver module 2002 is configured to support the terminal in performing S1404 in FIG. 14, and/or another receiving and sending operation that needs to be performed by the terminal device in this embodiment of this application.

In another possible example, an example in which the communication apparatus 2000 is an access network device is used. The processing module 2001 is configured to support the access network device in performing S1501 in FIG. 15 and/or another processing operation that needs to be performed by the access network device in this embodiment of this application. The transceiver module 2002 is configured to support the access network device in performing S1502 in FIG. 15 and/or another sending operation that needs to be performed by the access network device in this embodiment of this application.

In still another possible example, an example in which the communication apparatus 2000 is a terminal device is used. The processing module 2001 is configured to support the terminal device in performing S1602 in FIG. 16 and/or another processing operation that needs to be performed by the terminal device in this embodiment of this application. The transceiver module 2002 is configured to support the terminal in performing S1601 and S1603 in FIG. 16 and/or another receiving and sending operation that needs to be performed by the terminal device in this embodiment of this application.

In still another possible example, an example in which the communication apparatus 2000 is an access and mobility management network element in a macro network is used. The processing module 2001 is configured to support another processing operation that needs to be performed by the access and mobility management network element in the macro network. The transceiver module 2002 is configured to support the access and mobility management network element in the macro network in performing S1701, S1702, and S1703 in FIG. 17 and/or another receiving and sending operation that needs to be performed by the access and mobility management network element in the macro network in this embodiment of this application.

In still another possible example, an example in which the communication apparatus 2000 is a second decryption network element in a macro network is used. The processing module 2001 is configured to support the second decryption network element in the macro network in performing S1801 and S1802 in FIG. 18 and/or another processing operation that needs to be performed by the second decryption network element in the macro network in this embodiment of this application. The transceiver module 2002 is configured to support the second decryption network element in the macro network in performing S1803 in FIG. 18 and/or another receiving and sending operation that needs to be performed by the second decryption network element in the macro network in this embodiment of this application.

In still another possible example, an example in which the communication apparatus 2000 is a terminal device is used. The processing module 2001 is configured to support the terminal device in performing S1901 in FIG. 19 and/or another processing operation that needs to be performed by the terminal device in this embodiment of this application. The transceiver module 2002 is configured to support the terminal in performing S1902 in FIG. 19 and/or another receiving and sending operation that needs to be performed by the terminal device in this embodiment of this application.

Optionally, the communication apparatus 2000 may further include a storage module 2003, configured to store program code and data of the communication apparatus, where the data may include but is not limited to raw data, intermediate data, or the like.

The processing module 2001 may be a processor or a controller, for example, may be a CPU, a general-purpose processor, an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor.

The transceiver module 2002 may be a communication interface, a transmitter, a transmitter circuit, a receiver, a receiver circuit, or the like. The communication interface is a general term. During specific implementation, the communication interface may include a plurality of interfaces.

The storage module 2003 may be a memory.

When the processing module 2001 is a processor, the transceiver module 2002 is a communication interface, and the storage module 2003 is a memory, the communication apparatus in this embodiment of this application may be as shown in FIG. 21.

Refer to FIG. 21. A communication apparatus 2100 includes a processor 2101, a communication interface 2102, and a memory 2103. Optionally, the communication apparatus may further include a bus 2104. The communication interface 2102, the processor 2101, and the memory 2103 may be connected to each other through the bus 2104. The bus 2104 may be a peripheral component interconnect (peripheral component interconnect, PCI) bus, an extended industry standard architecture (extended industry standard architecture, EISA) bus, or the like. The bus 2104 may be classified into an address bus, a data bus, a control bus, and the like. For ease of representation, only one bold line is used for representation in FIG. 21, but this does not mean that there is only one bus or only one type of bus.

Optionally, an embodiment of this application further provides a computer program product including computer instructions. When the computer instructions are run on a computer, the computer is enabled to perform the method described in the foregoing embodiments.

Optionally, an embodiment of this application further provides a computer-readable storage medium. The computer-readable storage medium stores computer instructions. When the computer instructions are run on a computer, the computer is enabled to perform the method described in the foregoing embodiments.

Optionally, an embodiment of this application further provides a chip, including a processing circuit and a transceiver circuit. The processing circuit and the transceiver circuit are configured to implement the method described in the foregoing embodiments. The processing circuit is configured to perform a processing action in a corresponding method, and the transceiver circuit is configured to perform a receiving/sending action in the corresponding method.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state drive (solid-state drive, SSD)), or the like.

In the several embodiments provided in this application, it should be understood that the disclosed system, apparatus, and method may be implemented in other manners. For example, the apparatus embodiment described above is merely an example. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic or other forms.

The units described as separate parts may or may not be physically separate, and a part displayed as a unit may or may not be a physical unit, that is, may be located at one position, or may be distributed on a plurality of devices. Some or all of the units may be selected based on actual requirements to achieve the objectives of the solutions of the embodiments.

Based on the foregoing descriptions of the implementations, a person skilled in the art may clearly understand that this application may be implemented by software in addition to necessary universal hardware or by hardware only. In most circumstances, the former is a better implementation. Based on such an understanding, the technical solutions of this application essentially or the part making contribution may be implemented in a form of a software product. The computer software product is stored in a readable storage medium, such as a floppy disk, a hard disk drive, or an optical disc of a computer, and includes several instructions for instructing a computer device (which may be a personal computer, a server, or a network device) to perform the methods described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A key management method, comprising:
obtaining, by a terminal device, identification information of a first decryption network element in a local network;
obtaining, by the terminal device based on the identification information and a mapping relationship, a first encryption key corresponding to the first decryption network element, wherein the mapping relationship records at least one decryption network element and an encryption key corresponding to each of the at least one decryption network element, and the at least one decryption network element comprises the first decryption network element;
encrypting, by the terminal device, user identity information by using the first encryption key, to obtain a hidden user identity; and
sending, by the terminal device, a registration request to the local network through an access network device, wherein the registration request comprises the hidden user identity.

2. The method according to claim 1, wherein the obtaining, by a terminal device, identification information of a first decryption network element in a local network comprises:
receiving, by the terminal device, a broadcast message, wherein the broadcast message comprises the identification information of the first decryption network element and an identifier of the local network.

3. The method according to claim 1, wherein the obtaining, by a terminal device, identification information of a first decryption network element in a local network comprises:
receiving, by the terminal device, an identifier of the local network and a first identifier from the access network device, wherein the first identifier identifies a decryption network element in the local network; and
determining, by the terminal device, the identification information of the first decryption network element based on the identifier of the local network and the first identifier.

4. The method according to claim 2 or 3, wherein the identifier of the local network is a public land mobile network identifier PLMN ID used by the local network.

5. The method according to any one of claims 1 to 4, wherein the terminal device comprises mobile equipment ME and a universal subscriber identity module USIM, and the mapping relationship is preconfigured in the USIM;
the obtaining, by a terminal device, identification information of a first decryption network element in a local network comprises:
obtaining, by the ME, the identification information of the first decryption network element in the local network;
the obtaining, by the terminal device based on the identification information and a mapping relationship, a first encryption key corresponding to the first decryption network element comprises:
sending, by the ME, the identification information to the USIM; and
determining, by the USIM based on the identification information and the mapping relationship, the first encryption key corresponding to the first decryption network element;
the encrypting, by the terminal device, user identity information by using the first encryption key, to obtain a hidden user identity comprises:
encrypting, by the USIM, the user identity information by using the first encryption key, to obtain the hidden user identity, and sending the hidden user identity to the ME; and
receiving, by the ME, the hidden user identity from the USIM; and
the sending, by the terminal device, a registration request to the local network through an access network device comprises:
sending, by the ME, the registration request to the local network through the access network device.

6. The method according to any one of claims 1 to 4, wherein the terminal device comprises ME and a USIM, and the mapping relationship is preconfigured in the USIM;
the obtaining, by a terminal device, identification information of a first decryption network element in a local network comprises:
obtaining, by the ME, the identification information of the first decryption network element in the local network;
the obtaining, by the terminal device based on the identification information and a mapping relationship, a first encryption key corresponding to the first decryption network element comprises:
sending, by the ME, a first request to the USIM;
sending, by the USIM, the mapping relationship and the user identity information to the ME in response to the first request;
receiving, by the ME, the mapping relationship and the user identity information from the USIM; and
determining, by the ME based on the identification information and the mapping relationship, the first encryption key corresponding to the first decryption network element;
the encrypting, by the terminal device, user identity information by using the first encryption key, to obtain a hidden user identity comprises:
encrypting, by the ME, the user identity information by using the first encryption key, to obtain the hidden user identity; and
the sending, by the terminal device, a registration request to the local network through an access network device comprises:
sending, by the ME, the registration request to the local network through the access network device.

7. The method according to any one of claims 1 to 4, wherein the method further comprises:
receiving, by the terminal device, the mapping relationship from a second decryption network element in a macro network through the access network device.

8. The method according to claim 7, wherein
the mapping relationship is carried in a registration accept message; or
the mapping relationship is carried in a user equipment configuration update command message.

9. The method according to claim 7 or 8, wherein the terminal device comprises ME and a USIM;
the obtaining, by a terminal device, identification information of a first decryption network element in a local network comprises:
obtaining, by the ME, the identification information of the first decryption network element in the local network;
the receiving, by the terminal device, the mapping relationship from a second decryption network element in a macro network through the access network device comprises:
receiving, by the ME, the mapping relationship from the second decryption network element in the macro network through the access network device;
the obtaining, by the terminal device based on the identification information and a mapping relationship, a first encryption key corresponding to the first decryption network element comprises:
determining, by the ME based on the identification information and the mapping relationship, the first encryption key corresponding to the first decryption network element;
the encrypting, by the terminal device, user identity information by using the first encryption key, to obtain a hidden user identity comprises:
sending, by the ME, a second request to the USIM;
sending, by the USIM, the user identity information to the ME in response to the second request;
receiving, by the ME, the user identity information from the USIM; and
encrypting, by the ME, the user identity information by using the first encryption key, to obtain the hidden user identity; and
the sending, by the terminal device, a registration request to the local network through an access network device comprises:
sending, by the ME, the registration request to the local network through the access network device.

10. The method according to claim 7 or 8, wherein the terminal device comprises ME and a USIM;
the obtaining, by a terminal device, identification information of a first decryption network element in a local network comprises:
obtaining, by the ME, the identification information of the first decryption network element in the local network;
the receiving, by the terminal device, the mapping relationship from a second decryption network element in a macro network through the access network device comprises:
receiving, by the ME, the mapping relationship from the second decryption network element in the macro network through the access network device;
the obtaining, by the terminal device based on the identification information and a mapping relationship, a first encryption key corresponding to the first decryption network element comprises:
determining, by the ME based on the identification information and the mapping relationship, the first encryption key corresponding to the first decryption network element;
the encrypting, by the terminal device, user identity information by using the first encryption key, to obtain a hidden user identity comprises:
sending, by the ME, the first encryption key to the USIM;
receiving, by the USIM, the first encryption key from the ME;
encrypting, by the USIM, the user identity information by using the first encryption key, to obtain the hidden user identity, and sending the hidden user identity to the ME; and
receiving, by the ME, the hidden user identity from the USIM; and
the sending, by the terminal device, a registration request to the local network through an access network device comprises:
sending, by the ME, the registration request to the local network through the access network device.

11. The method according to any one of claims 7 to 10, wherein the method further comprises:
sending, by the terminal device, capability information to an access and mobility management network element in the macro network, wherein the capability information indicates that the terminal device has a capability of accessing the local network.

12. A key management method, comprising:
in a process of establishing a backhaul link between an access network device and a core network element in a local network, obtaining, by the access network device, identification information of a first decryption network element in the local network; and
sending, by the access network device, the identification information of the first decryption network element.

13. The method according to claim 12, wherein the sending, by the access network device, the identification information of the first decryption network element comprises:
sending, by the access network device, a broadcast message, wherein the broadcast message comprises the identification information of the first decryption network element and an identifier of the local network.

14. The method according to claim 12, wherein the sending, by the access network device, the identification information of the first decryption network element comprises:
sending, by the access network device, an identifier of the local network and a first identifier, wherein the identifier of the local network and the first identifier are used to determine the identification information of the first decryption network element.

15. The method according to claim 13 or 14, wherein the identifier of the local network is a public land mobile network identifier PLMN ID used by the local network.

16. The method according to any one of claims 12 to 15, wherein the method further comprises:
establishing, by the access network device, the backhaul link to the core network element in the local network when a connection between the access network device and a core network element in a macro network is broken.

17. The method according to any one of claims 12 to 16, wherein the method further comprises:
establishing, by the access network device, an internet protocol security IPsec link to the core network element in the local network, wherein the backhaul link comprises the IPsec link; and
the obtaining, by the access network device, identification information of a first decryption network element in the local network comprises:
receiving, by the access network device, the identification information of the first decryption network element from the core network element in the local network by using an internet key exchange protocol security association initial IKE_SA_INIT message or an internet key exchange protocol authentication IKE_AUTH message.

18. The method according to any one of claims 12 to 16, wherein the method further comprises:
establishing, by the access network device, a datagram transport layer security DTLS link to the core network element in the local network, wherein the backhaul link comprises the DTLS link; and
the obtaining, by the access network device, identification information of a first decryption network element in the local network comprises:
receiving, by the access network device, the identification information of the first decryption network element from the core network element in the local network by using a handshake message.

19. A key management method, comprising:
when a terminal device needs to access a first local network, encrypting, by the terminal device, user identity information by using a null algorithm, to obtain a hidden user identity; and
sending, by the terminal device, a registration request to the first local network through an access network device, wherein the registration request comprises the hidden user identity.

20. The method according to claim 19, wherein the encrypting, by the terminal device, user identity information by using a null algorithm, to obtain a hidden user identity comprises:
encrypting, by the terminal device, the user identity information by using the null algorithm and a default encryption key, to obtain the hidden user identity, wherein the hidden user identity further comprises an identifier of the default encryption key, and a value of the identifier is 0.

21. The method according to claim 19 or 20, wherein the method further comprises:
receiving, by the terminal device, an identifier of the first local network from the access network device; and
determining, by the terminal device in response to the identifier of the first local network, that the terminal device needs to access the first local network.

22. The method according to claim 21, wherein the determining, by the terminal device in response to the identifier of the first local network, that the terminal device needs to access the first local network comprises:
when a preset condition is met, determining, by the terminal device in response to the identifier of the first local network, that the terminal device needs to access the first local network, wherein the preset condition comprises at least one of the following:
first information is preconfigured for the terminal device, wherein the first information indicates the terminal device to access a local network after receiving an identifier of the local network; or
the terminal device finds no second network, wherein the second network is a network other than the first local network.

23. The method according to any one of claims 19 to 22, wherein the terminal device comprises mobile equipment ME and a universal subscriber identity module USIM;
the encrypting, by the terminal device, user identity information by using a null algorithm, to obtain a hidden user identity comprises:
sending, by the ME, indication information to the USIM;
encrypting, by the USIM, the user identity information by using the null algorithm in response to the indication information, to obtain the hidden user identity, and sending the hidden user identity to the ME; and
receiving, by the ME, the hidden user identity from the USIM; and
the sending, by the terminal device, a registration request to the first local network through an access network device comprises:
sending, by the ME, the registration request to the first local network through the access network device.

24. The method according to any one of claims 19 to 22, wherein the terminal device comprises ME and a USIM;
the encrypting, by the terminal device, user identity information by using a null algorithm, to obtain a hidden user identity comprises:
sending, by the ME, a first request to the USIM;
sending, by the USIM, the user identity information to the ME in response to the first request;
receiving, by the ME, the user identity information from the USIM; and
encrypting, by the ME, the user identity information by using the null algorithm, to obtain the hidden user identity; and
the sending, by the terminal device, a registration request to the first local network through an access network device comprises:
sending, by the ME, the registration request to the first local network through the access network device.

25. The method according to any one of claims 19 to 24, wherein the identifier of the first local network is a public land mobile network identifier PLMN ID used by the first local network.

26. A key management method, comprising:
obtaining, by a second decryption network element in a macro network, identification information of a first decryption network element, wherein the first decryption network element is a network element in a first local network;
determining, by the second decryption network element in the macro network, a first encryption key based on the identification information of the first decryption network element and a mapping relationship, wherein the mapping relationship records at least one decryption network element and an encryption key corresponding to each of the at least one decryption network element, and the at least one decryption network element comprises the first decryption network element; and
sending, by the second decryption network element in the macro network, the first encryption key to a terminal device, wherein the first encryption key corresponds to the first decryption network element.

27. The method according to claim 26, wherein the obtaining, by a second decryption network element in a macro network, identification information of a first decryption network element comprises:
receiving, by the second decryption network element in the macro network, the identification information of the first decryption network element from an access and mobility management network element in the macro network.

28. The method according to claim 27, wherein the method further comprises:
receiving, by the second decryption network element in the macro network, indication information from the access and mobility management network element in the macro network, wherein the indication information indicates the second decryption network element in the macro network to provide an encryption key for the terminal device; and
the sending, by the second decryption network element in the macro network, the first encryption key to a terminal device comprises:
sending, by the second decryption network element in the macro network, the first encryption key to the terminal device based on the indication information.

29. The method according to claim 27, wherein before the obtaining, by a second decryption network element in a macro network, identification information of a first decryption network element, the method further comprises:
determining, by the second decryption network element in the macro network based on local network subscription information of the terminal device, to send a request message to an access and mobility management network element in the macro network, wherein the request message is used to request the identification information of the first decryption network element.

30. The method according to claim 26, wherein the method further comprises:
receiving, by the second decryption network element in the macro network, first information from an access and mobility management network element in the macro network, wherein the first information comprises identification information of a decryption network element corresponding to each of at least one local network, and the at least one local network comprises the first local network; and
the obtaining, by a second decryption network element in a macro network, identification information of a first decryption network element comprises:
obtaining, by the second decryption network element in the macro network, the identification information of the first decryption network element from the first information based on local network subscription information of the terminal device and information about a first access network device, wherein the first access network device is configured to provide a communication service for the terminal device.

31. The method according to claim 26, wherein the obtaining, by a second decryption network element in a macro network, identification information of a first decryption network element comprises:
obtaining, by the second decryption network element in the macro network, the identification information of the first decryption network element from preconfigured information based on local network subscription information of the terminal device and information about a first access network device, wherein
the preconfigured information comprises identification information of a decryption network element corresponding to each of at least one local network, the at least one local network comprises the first local network, and the first access network device is configured to provide a communication service for the terminal device.

32. A key management method, comprising:
receiving, by a terminal device, a first encryption key from a second decryption network element in a macro network, wherein there is a correspondence between the first encryption key and a first local network;
when the terminal device receives an identifier of the first local network, encrypting, by the terminal device, user identity information by using the first encryption key, to obtain a hidden user identity; and
sending, by the terminal device, a registration request to the first local network, wherein the registration request comprises the hidden user identity.

33. The method according to claim 32, wherein the method further comprises:
sending, by the terminal device, capability information to an access and mobility management network element in the macro network, wherein the capability information indicates that the terminal device has a capability of accessing the local network.

34. The method according to claim 32 or 33, wherein the identifier of the first local network is a public land mobile network identifier PLMN ID used by the first local network.

35. The method according to any one of claims 32 to 34, wherein the terminal device comprises mobile equipment ME and a universal subscriber identity module USIM;
the receiving, by a terminal device, a first encryption key from a second decryption network element in a macro network comprises:
receiving, by the ME, the first encryption key from the second decryption network element in the macro network;
the encrypting, by the terminal device, user identity information by using the first encryption key, to obtain a hidden user identity comprises:
sending, by the ME, the first encryption key to the USIM;
encrypting, by the USIM, the user identity information by using the first encryption key, to obtain the hidden user identity, and sending the hidden user identity to the ME; and
receiving, by the ME, the hidden user identity from the USIM; and
the sending, by the terminal device, a registration request to the first local network comprises:
sending, by the ME, the registration request to the first local network.

36. The method according to any one of claims 32 to 34, wherein the terminal device comprises ME and a USIM;
the receiving, by a terminal device, a first encryption key from a second decryption network element in a macro network comprises:
receiving, by the ME, the first encryption key from the second decryption network element in the macro network;
the encrypting, by the terminal device, user identity information by using the first encryption key, to obtain a hidden user identity comprises:
sending, by the ME, a first request to the USIM;
sending, by the USIM, the user identity information to the ME in response to the first request;
receiving, by the ME, the user identity information from the USIM; and
encrypting, by the ME, the user identity information by using the first encryption key, to obtain the hidden user identity; and
the sending, by the terminal device, a registration request to the first local network comprises:
sending, by the ME, the registration request to the first local network.

37. A key management method, comprising:
sending, by an access and mobility management network element in a macro network, identification information of a first decryption network element to a second decryption network element in the macro network, wherein the first decryption network element is a network element in a first local network;
receiving, by the access and mobility management network element in the macro network, a first encryption key from the second decryption network element in the macro network, wherein the first encryption key is associated with the first decryption network element; and
sending, by the access and mobility management network element in the macro network, the first encryption key to a terminal device.

38. The method according to claim 37, wherein the method further comprises:
obtaining, by the access and mobility management network element in the macro network, the identification information of the first decryption network element in a local network to which an access network device is attached, wherein the access network device is configured to transmit a registration request of the terminal device to the access and mobility management network element in the macro network.

39. The method according to claim 37 or 38, wherein the method further comprises:
determining, by the access and mobility management network element in the macro network, the identification information of the first decryption network element in the first local network when the access and mobility management network element in the macro network determines that the access network device has a capability of accessing the local network, wherein
the access network device is configured to provide a communication service for the terminal device.

40. The method according to claim 37 or 38, wherein the method further comprises:
receiving, by the access and mobility management network element in the macro network, capability information from the terminal device, wherein the capability information indicates a capability of the terminal device to access the local network; and
determining, by the access and mobility management network element in the macro network, the identification information of the first decryption network element in the first local network when the access and mobility management network element determines that the terminal device has the capability of accessing the local network.

41. The method according to claim 39 or 40, wherein the sending, by an access and mobility management network element in a macro network, identification information of a first decryption network element to a second decryption network element in the macro network comprises:
sending, by the access and mobility management network element in the macro network, the identification information of the first decryption network element to the second decryption network element in the macro network by using a subscription information request.

42. The method according to claim 41, wherein the method further comprises:
sending, by the access and mobility management network element in the macro network, indication information to the second decryption network element in the macro network, wherein the indication information indicates the second decryption network element in the macro network to provide an encryption key for the terminal device.

43. The method according to claim 42, wherein the subscriber information request comprises the indication information.

44. The method according to claim 37 or 38, wherein the method further comprises:
receiving, by the access and mobility management network element in the macro network, a request message from the second decryption network element in the macro network, wherein the request message is used to request the identification information of the first decryption network element; and
the sending, by an access and mobility management network element in a macro network, identification information of a first decryption network element to a second decryption network element in the macro network comprises:
sending, by the access and mobility management network element in the macro network, the identification information of the first decryption network element to the second decryption network element in the macro network based on the request message.

45. The method according to any one of claims 37 to 44, wherein
the identification information of the first decryption network element comprises an identifier of the first local network and a first identifier, and the first identifier identifies a decryption network element in the first local network.

46. A communication apparatus, wherein the apparatus comprises: a module configured to perform the method according to any one of claims 1 to 11, a module configured to perform the method according to any one of claims 12 to 18, a module configured to perform the method according to any one of claims 19 to 25, a module configured to perform the method according to any one of claims 26 to 31, a module configured to perform the method according to any one of claims 32 to 36, or a module configured to perform the method according to any one of claims 37 to 45.

47. A communication apparatus, wherein the communication apparatus comprises a processor and a memory, wherein the memory is configured to store computer instructions, and when the processor executes the instructions, the communication apparatus is enabled to perform the method according to any one of claims 1 to 11, the communication apparatus is enabled to perform the method according to any one of claims 12 to 18, the communication apparatus is enabled to perform the method according to any one of claims 19 to 25, the communication apparatus is enabled to perform the method according to any one of claims 26 to 31, the communication apparatus is enabled to perform the method according to any one of claims 32 to 36, or the communication apparatus is enabled to perform the method according to any one of claims 37 to 45.

48. A chip, wherein the chip comprises a processor, and when the processor executes computer program instructions, the chip is enabled to perform the method according to any one of claims 1 to 11, any one of claims 12 to 18, any one of claims 19 to 25, any one of claims 26 to 31, any one of claims 32 to 36, or any one of claims 37 to 45.

49. A computer-readable storage medium, wherein the computer-readable storage medium comprises a computer program or instructions, and when the computer program or the instructions are run on a computer, the computer is enabled to perform the method according to any one of claims 1 to 45.

50. A computer program product, wherein the computer program product comprises instructions, and when the computer program product runs on a computer, the computer is enabled to perform the method according to any one of claims 1 to 45.

51. A communication system, wherein the communication system comprises the terminal device according to any one of claims 1 to 11 and the access network device according to any one of claims 12 to 18;
the communication system comprises an access network device and the terminal device according to any one of claims 19 to 25; or
the communication system comprises the terminal device according to any one of claims 32 to 36, the access and mobility management network element according to any one of claims 37 to 45, and the decryption network element according to any one of claims 26 to 31.
